# EUROPEAN PATENT SPECIFICATION

(11) **EP 2 850 140 B1**
(45) Date of publication and mention of the grant of the patent: **06.07.2016**
(21) Application number: 13736638.1
(22) Date of filing: 16.05.2013
(51) Int. Cl.: C09D 4/00, C09D 183/00, C08G 77/00

(54) **RADIATION CURABLE COMPOSITION, AND METHOD FOR PREPARING A HYBRID SOL-GEL LAYER ON A SURFACE OF A SUBSTRATE USING SAID COMPOSITION**
STRAHLUNGSHÄRTBARE ZUSAMMENSETZUNG UND VERFAHREN ZUR HERSTELLUNG EINER HYBRIDEN SOL-GEL-SCHICHT AUF EINER OBERFLÄCHE EINES SUBSTRATS UNTER VERWENDUNG DER BESAGTEN ZUSAMMENSETZUNG
COMPOSITION DURCISSABLE PAR RAYONNEMENT ET PROCÉDÉ POUR PRÉPARER UNE COUCHE SOL-GEL HYBRIDE SUR UNE SURFACE D'UN SUBSTRAT AU MOYEN DE LADITE COMPOSITION

(30) Priority: 16.05.2012 US 201261647712 P
(43) Date of publication of application: 25.03.2015
(73) Proprietor: Université de Haute Alsace, 68093 Mulhouse (FR); Socomore, 56000 Vannes (FR)
(72) Inventor: CROUTXE-BARGHORN, Céline, F-68510 Rantzwiller (FR); CHEMTOB, Abraham, F-68100 Mulhouse (FR); NI, Lingli, Pujiang County Zhejiang 322203 (CN); MOREAU, Nadia, F-56880 Ploeren (FR); BOUDER, Thierry, F-56610 Arradon (FR)
(74) Representative: Brevalex
(86) International application number: PCT/IB2013/001356
(87) International publication number: WO 2013/171582

(56) References cited:
- US-A1- 2009 318 578
- US-A1- 2011 060 068
- US-B1- 6 828 381
- US-B1- 6 872 765

## Description

### FIELD OF THE INVENTION

The invention relates to a radiation curable composition for preparing a hybrid sol-gel layer on a surface of a substrate, more particularly on a surface of a substrate comprising a metal, and/or a metal alloy, and/or a composite material, preferably on a surface of a substrate composed of a metal, and/or a metal alloy, and/or a composite material. Preferably, the metal is aluminium, and the alloy is an aluminium alloy.

The invention is further related to a method for preparing a hybrid sol-gel layer on a surface of a substrate using said composition.

The technical field of the invention may be defined, generally speaking, as being that of the treatment of surfaces, especially of surfaces made of metals or of metal alloys, in particular the coating of surfaces made of metals, such as aluminium or titanium, or of metal alloys such as steels, that are used e.g. in the aerospace, automotive, shipbuilding, oil and gas transportation, wind and sea energy production, and drilling industries, for making e.g. cars, ships, aircrafts, pipelines, and offshore platforms. More specifically, the invention belongs to the technical field of protection surface coatings, known as hybrid sol-gel surface coatings, used to coat the surface of substrates made, for example, of metals or of metal alloys, and to protect said surface against aggressive environments such as corrosive atmospheres, and chemical and/or mechanical stresses. Said hybrid sol-gel surface coatings can for example impart resistance to solvents, fuels, and hydraulic fluids, and resistance to impacts and abrasion.

Said hybrid sol gel coatings can replace protective and/or decorative organic coating layers, such as conversion layers, primer layers, paint layers, or complete paint systems used on substrates made for example of metals, of metal alloys, or of composite materials.

### BACKGROUND OF THE INVENTION.

Conversion treatments lead to a superficial structural modification of the metal substrate (e.g. alloys of aluminium, titanium and other metals) by an anodisation process (an operation of electrolysis, for example chromic, sulphuric or phosphoric anodic oxidation) or by a simple chemical conversion process (for example, chromatizing or phosphatizing).

Said treatments allow a highly adherent layer of oxide (or hydroxide) to be grown, at the expense of the base metal, said layer being placed in an anode situation. On aluminium alloys, in particular, the baths of chromic acid lead to the formation of a fine (several microns) layer which is porous and exhibits a good capacity for the adhesive bonding of organic coatings.

Among the chemical conversion processes, chromatizing allows the formation of a highly adherent, thin deposit of metal chromates, by contacting the surface of the component to be treated (typically alloys of aluminium, zinc or steels) with an acidic solution based on dichromates and fluorine-containing activators. This treatment enhances the corrosion resistance of the substrate and is also used as a tie base for paints.

Because they use strong acids or bases and toxic materials such as chromates in immersion tanks, these surface treatment processes exhibit many disadvantages, particularly with regard to their harmful influence on the environment.

Other drawbacks of said surface treatment processes is the high amount of energy needed for their heating and maintenance, and the fact that their use is limited to elementary parts.

Moreover, these processes require substantial amounts of water for rinsing the excess treatment solutions away from the treated components; the rinsing water and the spent process solutions must be treated in order to remove the dissolved metals, before they are disposed of or re-used; the removal of the metals produces additional toxic waste, which is difficult to purify and to dispose of.

The entirety of these treatments, subsequent to the implementation of the processes, increases the cost of use of the conventional wet-chemical processes.

Similarly, components treated at the end of their life, or in renovation phases, give rise to toxic waste which is prejudicial for the users.

Recently much stricter legislations have mandated in Europe and in the US for the progressive reduction and finally removal of the environmentally hazardous compounds, especially chromate species, making therefore urgent the need for the development of non-chromate coatings.

Consequently processes have been proposed which employ the sol-gel coating technique in order to overcome the disadvantages of the aforementioned wet-chemical processes and especially of the processes involving chromates.

Among the various techniques developed, sol-gel process is considered to be one of the most promising alternative methods to conventional chromate treatment. There are a lot of advantages inherent to the sol-gel process. First, sol-gel technology provides a low temperature chromate-free route for the preparation of coatings that are applicable to most of metallic substrates; further the properties of sol-gel coatings can be controlled by various synthesis parameters; at last, it is possible to introduce a wide range of functional additives into the formulation, thus enabling to adjust the physical and chemical properties and to impart specific functionalities to the coatings.

Historically, the first type of sol-gel corrosion protection coatings is inorganic oxide sol-gel derived films. Various sol-gel oxide films such as SiO₂, ZrO₂, CeO₂, SiO₂/Al₂O₃ and SiO₂/TiO₂ have been extensively studied to impart corrosion protection to various metallic substrates.

However, there are some limitations to said inorganic oxide sol-gel derived films due to the inorganic character of the material.

For instance, limited coating thickness owing to the crackability undermined the protection performance which restricted the applications in the aerospace industry.

To overcome those limitations, an attractive solution is to introduce an additional organic component into the inorganic sol-gel network to form a hybrid organic inorganic coating via a conventional sol-gel polymerization process using organometallic precursor compound.

Such hybrid sol-gel coatings combine the advantages of both organic and inorganic coatings.

An example of a formulation that can be used to prepare hybrid sol-gel coatings is the product known as "*Boegel*" developed by Boeing.

*"Boegel"* is a water basis diluted sol comprising GlycidyloxyPropylTriMethoxySilane (GPTMS) and Zirconium Tetrapropoxide (TPOZ) as main components, which can form a thin hybrid coating deposited on an aluminium alloy surface.

The hybrid sol-gel coatings prepared from said diluted sol intrinsically has limited anticorrosion properties.

The corrosion resistance is not provided by the sol-gel coating itself but by the combination of the sol-gel coating -acting as adhesion promoter- with the paint systems.

Moreover, the methods for producing hybrid sol-gel coatings from said diluted sol involve several steps including the sol preparation and hydrolysis reactions.

Finally said sol has a limited pot life.

Some improvements to said hybrid organic inorganic sol-gel coatings are described in WO-A2-2007/003828 which discloses a concentrated sol, free of any noxious solvent and allowing the preparation of sol-gel coatings having an increased dry thickness, and a better corrosion resistance.

However, to obtain such a corrosion resistance, assessed by the neutral salt spray test, drying at a temperature above 60 °C, preferably above 80°C, more preferably above 100°C is absolutely required.

Moreover, the corrosion resistance, as assessed by the Salt Spray Test of the sol gel coatings produced in WO-A2-2007/003828 is only of about 168 hours.

On the other hand, recently, UV curing technology has been combined with hybrid sol-gel material with many advantages such as low energy consumption, high reactivity, solvent-free technology, and stability of the formulations when not exposed to UV light.

The UV technology, combined with the introduction of an inorganic phase at the nanoscale, has given birth to a variety of novel UV cured hybrid materials but the photopolymerization was generally limited to the organic part.

Interestingly, UV irradiation was also proved to be suitable to induce a sol-gel reaction through the catalysis of photoacids produced by the photolysis of onium salts

Thus, US-A-4,101,513 discloses onium salts that are radiation activable catalysts for the hydrolysis of alkoxysilanes. Anhydrous compositions comprising said silanes and said catalysts are storage stable.This opens up perspective for the replacement of conventional thermal curing sol-gel process by a photoinduced sol-gel process catalysed by photoacid.

The super acids produced by photolysis of onium salts are also well-known photoinitiators of cationic photopolymerization.US-A1-2009/0318578 discloses an ultraviolet-curable coating composition comprising (A) at least one silane having a hydrolysable group and at least one group containing a cyclic ether; (B) at least one material containing one or more cyclic ether groups; which is not an alkoxysilane and is different from the silane (A); and (C) a cationic photoinitiator. In other words, the compositions of said document combine the cationic cure capability of cyclic ethers and other cationic curing materials with the cationic induced hydrolysis and subsequent condensation typical of alkoxysilanes.

Although the coatings prepared using said compositions exhibit some corrosion resistance, said resistance is actually very limited.

In addition, said patent application is silent on the mechanical properties and solvent resistance of the coatings prepared using said compositions.

US-A1-2011/0060068 discloses radiation-curable, free-radically crosslinkable formulations comprising at least one alkoxysilane and at least one acid-generating photoinitiator.

In the same way as the compositions of US-A1-2009/0318578 mentioned above, although the coatings prepared using the compositions of US-A1-2011/0060068 exhibit some corrosion resistance, said resistance is actually very limited.

In addition, said patent application is again silent on the mechanical properties and solvent resistance of the coatings prepared using said compositions.

Overall, in the methods, such as the method disclosed in US-A1-2009/0318578, involving photo sol-gel polymerization, the photolysis of a cationic photoinitiator such as a diaryl iodonium salt generates a photoacid (superacid) which then catalyzes both the cationic polymerization of a cationically radiation polymerizable resin and the sol gel polymerization of silanes precursors in the presence of water (moisture) present in the ambient atmosphere.

Hybrid sol gel films are therefore obtained.

Said methods have some advantages such as:
- Single step processes (liquid precursor based film to cross-linked film);
- Rapid reaction;
- No water addition because hydrolysis of the silane precursors relies simply on moisture diffusion from ambient air;
- 1-K stable formulations until exposed to UV light;
- Easy to perform.

Document US-B1-6,872,765 is related to a sol-gel coating for single-layer or multi-layer varnishes.

In particular, said document discloses a sol-gel coating material containing:
(A) an acrylate copolymer solution containing at least one acrylate copolymer;
(B) a parent varnish which can prepared by hydrolysis and condensation of at least one hydrolysable silane of the general formula SiR₄;
(C) an « additive » solution containing at least one ethylenically unsaturated compound containing at least one epoxide group; at least one silane with at least one non-hydrolysable group R presenting at least one epoxide group; at least one adduct of at least one silane with at least one non hydrolysable group R presenting at least one amino group and at least one cyclic ethylenically unsaturated dicarboxylic acid anhydride.

Document US-B1-6,828,381 is related to a sol-gel coating material containing:
(A) an acrylate copolymer solution containing at least one acrylate copolymer;
(B) a parent lacquer which can prepared by hydrolysis and condensation of at least one hydrolysable silane of the formula SiR₄(I);
(C) a sol which can be produced by the hydrolysis, condensation, and complexing of at least one hydrolysable metal compound, at least one organic thio compound, and of a hydrolysable silane (I).

However, although the coatings prepared using the above formulations provide some corrosion protection on steel. There still exists a need for a solvent free, 1-K, coating having improved, very good anti-corrosion properties and also having good mechanical and solvent resistance properties.

In the light of the above, therefore, there exists a need for a radiation curable composition for preparing a hybrid sol-gel layer on a surface of a substrate, for example of a metal surface, that makes it possible to prepare a hybrid sol-gel layer that has an enhanced and high corrosion resistance as defined in particular by the salt-spray treatment test and that has also good mechanical properties and good solvent resistance.

In other words, and contrary to the known radiation curable composition for preparing a hybrid sol-gel layer, an huge enhancement of the corrosion protection of metals including neutral salt spray and filiform corrosion must be achieved without detriment to the other properties of the hybrid sol-gel coating, including the mechanical resistance such as the scratch resistance, and wear resistance, the chemical resistance such as the solvent and hydraulic fluids.

There also exists a need for a radiation curable composition which has a low or zero solvent content, particularly in terms of noxious or toxic solvents, and in terms of other compounds that might have an adverse influence on the environment.

There exists, finally, a need for a process for preparing a 1-K, solvent free hybrid sol-gel coating on a surface, for example a metal surface, that is simple, reliable, easy to carry out, which comprises a limited number of steps and treatments or coats to apply, and which can easily be integrated into the existing processes, so as to reduce workers exposures and application cycles for surface treatment of metal or composite surfaces.

The goal of the invention is to provide a radiation curable composition for preparing a radiation curable hybrid sol-gel layer on a surface of a substrate, for example of a surface comprising a metal, and a method for preparing a hybrid sol-gel layer on a surface, for example a surface comprising a metal or a metal alloy, that uses said composition, which meet the needs set out above, among others, and which satisfy the criteria and requirements mentioned earlier on above.

A further goal of the invention is to provide a radiation curable composition for preparing a hybrid sol-gel layer on a surface-of a substrate, for example of a surface comprising a metal, and a method for preparing a hybrid sol-gel layer on a surface, for example a surface comprising a metal or a metal alloy, that do not exhibit the disadvantages, defects, limitations and drawbacks of the prior-art compositions and methods, and which solve the problems of the compositions and methods of the prior art.

### SUMMARY OF THE INVENTION

These goals, and still other goals, are achieved, according to the invention by a radiation curable composition according to claims 1 to 11 for preparing a hybrid sol-gel layer on a surface of a substrate.

Advantageously, the total concentration, amount, of the radiation curable material(s), of the silane(s) of formula (I), and of the other silane(s) may be generally from 5% to 99.8% by weight, preferably from 10% to 99.5% by weight, preferably from 25% to 98.5% by weight, preferably from 30% to 97.5% by weight, preferably from 40% to 95% by weight, preferably from 48% or 50% to 95% by weight, preferably from 58% to 94.5% by weight, preferably from 59% to 91% by weight, preferably from 60% to 90% by weight, preferably from 70% to 80% by weight of the total weight of the radiation curable composition.

Specific ranges of said total concentration of the radiation curable material(s), of the silane(s) of formula (I), and of the other silane(s) are 90% to 99.5% by weight, 95% to 99.5% by weight, 97% to 99.5% by weight of the total weight of the radiation curable composition.

Specific values of said total concentration of the radiation curable material(s), of the silane(s) of formula (I), and of the other silane(s) are 92.3% by weight, 98.7% by weight, and 96.8% by weight of the total weight of the radiation curable composition.

The amount, concentration, of cationic photoinitiator is specified hereinbelow.

The total amount, concentration, by weight of all the components of the composition is of course 100% by weight.

The man skilled in the art knows how to adjust, especially within the concentration ranges provided herein, the total concentration of the radiation curable material(s), of the silane(s) of formula (I), and of the other silane(s); the concentration of the cationic photoinitiator; and the concentration of the other optional agents of the composition recited below to reach 100% by weight.

The hydrocarbyl groups may be any kind of hydrocarbyl group comprising C and H atoms and may include e.g. alkyl groups, cycloalkyl groups, alkenyl groups, cycloalkenyl groups, aromatic groups; and may be linear or branched.

Preferably, the silane of formula (I) is an organo mono( trialkoxysilane) in which:
- R' is a linear or branched alkyl group having 1 to 6C atoms, preferably R' is a methyl or ethyl group, and
- R is a linear or branched alkyl group having 1 to 20C atoms , preferably 4 to 16C atoms, more preferably from 8 to 12C atoms optionally interrupted by at least one heteroatom, selected among oxygen, sulphur, and nitrogen atoms; a cycloalkyl group having 3 to 20C atoms, for example 6C atoms (cyclohexyl); a linear or branched alkenyl group having 1 to 20C atoms such as a vinyl group; an aryl group having 3 to 20C atoms such as a phenyl group; an alkyl (1 to 20C)-aryl (3 to 20C) group; or an aryl (3 to 20C)-alkyl(1 to 20C) group; and R being optionally substituted by one or more substituent selected from the group consisting of halogen atoms, amino groups (NH₂) and SH groups.

All the alkyl groups may be linear or branched.

In particular, the alkyl or cycloalkyl group of R may be perfluorinated.

Generally, the radiation curable material is different from the silane of formula (I), and from the other silane (silane of formula (II), of formula (III) and, generally, is not a silane.

The other silane is different from the silane of formula (I).

Like the curable compositions of the prior art, the curable compositions according to the invention are liquid at ambient temperature and are organic solvent -free and water-free.

By solvent-free (or water free) is generally meant that the curable composition comprises less than 5% by weight organic solvent (water), preferably less than 1% by weight solvent (water) of the total weight of the composition, more preferably 0% by weight organic solvent (water).

The curable compositions of the invention have therefore the advantages of being 1-K, coloured or not, pigmented or not, solvent free and water free formulations, that are stable over a long period of time, for example of at least 6 months, and preferably at least one year, until exposed to a radiation such as a light, preferably a UV light.

The compositions according to the invention are stable over a long period of time, i.e. they do not exhibit any deterioration of their properties over a period of time for example of at least 6 months, and preferably at-least one year.

The curable composition according to the invention comprises a radiation curable i.e. polymerizable and/or crosslinkable material, such as a resin, a cationic photoinitiator, and an organofunctional silane (of formula (I) (also simply called silane or formula (I)) in the same way as the curable compositions of the prior art.

However, the curable composition according to the invention is fundamentally different from the composition of the prior art in that said silane of formula (I) is not used alone but in combination with at least one other silane (different from the silane of formula (I)) specifically selected from among poly(alkoxy siloxane) wherein the alkoxy group has from 1 to 20C and a bissilane of formula (III), preferably bis(trialkoxysilane) wherein the alkoxy group has from 1 to 20C, and mixtures thereof.

Such a combination of a silane of formula (I) with at least one other specific silane, as defined above, is not disclosed nor suggested in the prior art as represented e.g. by the documents cited hereinabove.

The hybrid sol-gel layers prepared on a surface of a substrate, especially a metal substrate, by using the curable composition according to the invention surprisingly have a unique combination of beneficial properties that was never obtained heretofore by using the curable compositions according to the prior art which do not contain a combination of a silane of formula (I) with at least one other specific silane.

The hybrid sol-gel layers prepared on a surface of a substrate, especially a metal substrate, by using the curable composition according to the invention surprisingly have at the same time outstanding properties of adhesion, corrosion resistance, and chemical resistance, especially solvent resistance, and also outstanding mechanical properties.

In other words, contrary to the curing compositions of the prior art, the hybrid sol-gel layers prepared on a surface of a substrate by using the curable compositions according to the invention have an outstanding corrosion resistance, and also have, surprisingly, unlike the hybrid sol gel layers of the prior art, outstanding mechanical properties, adhesion properties and excellent chemical resistance, especially solvent resistance.

Specifically, the hybrid sol-gel layers prepared on a surface of a substrate, especially a metal substrate, e.g. an aluminium or aluminium alloy substrate, by using the curable composition according to the invention provide a corrosion resistance in the neutral spray test, according to NF EN ISO 9227:2007 standard greater than 1000 hours, preferably greater than 2000 hours and more preferably greater than 3000 hours; and the hybrid sol-gel layers prepared on a surface of a substrate, especially a metal substrate, e.g. an aluminium or aluminium alloy (such as a 2024 T3 aluminium alloy) substrate, by using the curable composition according to the invention also have, at the same time a solvent resistance determined according to ISO 2812-1:1993 standard greater than 2 hours, preferably greater than 24 hours.

The hybrid sol-gel layers prepared on a surface of a substrate, especially a metal substrate, e.g. an aluminium or aluminium alloy substrate, by using the curable composition according to the invention also have good adhesion properties as demonstrated by the fact that they pass the Cross-cut test according to ISO 2409:2003 standard.

The material making up the hybrid sol-gel layer prepared by curing the curable composition of the invention comprises an organic tridimensional network resulting from the cationic polymerization and crosslinking of the curable material, and an inorganic tridimensional network resulting from the sol-gel polymerization of the silane of formula (I) and of the other silane such as a poly(alkoxy siloxane), and/or a bissilane of formula (III), preferably bis(trialkoxysilane).

When the other silane is a poly(alkoxysilane) or a bissilane of formula (III), there is no covalent bond between the organic and inorganic networks which are simply interpenetrated.

Without wishing to be bound by any theory, the corrosion resistance is imparted to said material making up the hybrid sol-gel layer by the silane of formula (I), especially the hydrocarbyl group, e.g. alkyl groups thereof. However when the inorganic sol-gel network is based only on such silanes, the solvent resistance and mechanical resistance of the layer is poor.

According to the invention, the strength of the inorganic sol-gel network is increased by the addition of a "crosslinking" or/and a "coupling" agent such as the poly(alkoxy siloxane) and/or the bissilane of formula (III), preferably bis(trialkoxysilane).

Preferably, the concentration of the radiation curable material is from 20% to 80% by weight, preferably from 40% to 70% by weight, more preferably from 50% to 60% by weight of the total weight of the radiation curable material, the silane of formula (I) and the other silane(s); the concentration of the silane of formula (I) (e.g. the organo(trialkoxysilane)) is from 10% to 50% by weight, preferably from 10% to 40% by weight of the total weight of the radiation curable material, the silane of formula (I) and the other silane(s); and the total concentration of the other silane(s) is from 10% to 50% by weight, preferably from 10% to 40% by weight of the total weight of the radiation curable material, the silane of formula (I) and the other silane(s).

Another advantage of the compositions according to the invention is that they make it possible, to obtain dry, cured, hybrid sol-gel films having a high thickness ranging generally from 1 to 80 µm or even more, depending on the formulation, preferably from 5 to 45 µm, more preferably from 10 to 30 µm.

This thickness is obtained in a single layer by a single step deposition, by techniques such as bar coating, roll coating, dipping, sprinkling or spraying.

The compositions according to the invention are not applied using baths, thus saving, energy, water and maintenance. This is also one of the reasons why the compositions of the invention can be used not only to prepare and coat elementary parts, but also assembled parts (e.g. wings, aircrafts) that may have large sizes and/ or complex shapes.

Films of this kind can only be prepared with most of the prior-art sols or compositions by successive surface treatment and/or depositions of two or more layers and in a plurality of operations of application.

Moreover, the films prepared from the curable compositions according to the invention are of excellent quality and in particular have a regular thickness, without sags.

By virtue, in particular, of the increase in the dry thickness deposited per layer, which ranges, for example, from 1 to 80 µm or more, the intrinsic corrosion protection performance of the cured films obtained from the compositions according to the invention is significantly improved relative to that of the sol-gel and hybrid sol-gel films obtained from the prior-art sols.

Excellent results are also obtained for filiform corrosion. In other words, it is demonstrated that the film, layer, according to the invention achieves corrosion protection which is provided by a barrier layer effect due to the film, layer, on its own, and surprisingly does so in spite of the fact that, generally, no anti-corrosion agents are incorporated into the film, layer, according to the invention.

The level of adhesion and corrosion protection obtained with the hybrid sol-gel film, layer, of the invention alone is achieved with one layer whose dry thickness is generally from 1 µm to 80 µm, preferably from 5 µm to 45 µm, more preferably from 10 to 30 µm, on a wide variety of supports, substrates, -such as for example aluminium, titanium, stainless steel, composite materials, plastics, glasses, and so on- which may have been pre-treated.

Thus, the compositions according to the invention can be used not only to prepare hybrid sol-gel coatings which are substituted for chromate conversion coatings, but they can also be used to prepare hybrid sol-gel primers, hybrid sol-gel paints, and hybrid sol-gel coatings for specific applications as a monocoat for Direct-To-Metal (DTM) coatings which have very high corrosion and protection properties for general industry purposes.

By radiation curable material is meant a material that can be radiation, generally light (e.g. UV light) polymerized and/or crosslinked, i.e. a material that is radiation polymerizable and/or crosslinkable.

Said material comprises at least two cationically polymerizable functional groups.

Preferably, said material comprises from 2 to 5 cationically polymerizable functional groups, e.g. 2, 3, 4, or 5 cationically polymerizable functional groups, more preferably 2 functional groups.

Said cationically polymerizable functional groups may be selected from among cyclic ether groups such as epoxy, and oxetanyl groups, and vinyl ether functional groups. Preferably, said epoxy groups are part of a glycidyl or glycidyloxy group.

Said radiation curable material is usually called a resin, and may be a polymer, oligomer, or pre-polymer
Said radiation curable material may therefore be selected from the group consisting of epoxy resins and oxetane resins.

Advantageously the radiation curable material e.g. resin is selected from among the group consisting of 1,4-butanediol diglycidyl ether, diepoxide of cycloaliphatic alcohol hydrogenated Bisphenol A, (3,4-Epoxycyclohexane) methyl 3,4-epoxy cyclohexyl carboxylate, 1,4-cyclohexane dimethanol diglycidyl ether, tetrahydrophthalic acid diglycidyl ester, resorcinol diglycidyl ether, Bis[4-(glycidyloxy)phenyl]methane, the reaction product of epichlorohydrin and bisphenol A (DER 331), N,N-diglycidyl-4-glycidyloxy aniline, 4,5-epoxy-tetrahydrophtalic acid diglycidyl ester, tris(4-hydroxyphenyl) methane triglycidyl ether, pentaerythritol tetraglycidyl ether, 4,4'-methylenebis(N,N-diglycidylaniline), 4-hydroxybutyl vinyl ether, triethyleneglycol divinyl ether, 3-ethyl-3-hydroxymethyloxetane, Bis[1-ethyl(3-oxetanyl)] methyl ether, and mixtures thereof; preferably the radiation curable material e.g. resin is selected from among the group consisting of diepoxide of cycloaliphatic alcohol hydrogenated Bisphenol A, Pentaerythritol tetraglycidyl ether, Bis[1-ethyl(3-oxetanyl)] methyl ether, 3-ethyl-3-hydroxymethyl oxetane, and mixtures thereof.

The organo mono(trialkoxysilane) (I) may be selected from among the group consisting of phenyl trimethoxysilane (Phenyl TMS), cyclohexyl trimethoxysilane (Cyclohexyl TMS), iso-butyl trimethoxysilane (Iso-Butyl TMS), iso-octyl trimethoxysilane (Iso-Octyl TMS), linear alkyl (1 to 20C) trimethoxysilanes (CₙTMS with 1≤n≤20), preferably linear alkyl (1 to 8C) trimethoxysilanes (CₙTMS with 1≤n≤8), vinyl trimethoxysilane, 3-aminopropyl trimethoxysilane, 3-mercaptopropyl trimethoxysilane, and mixtures thereof; preferably, the organo mono(trialkoxy silane) may be selected from among the group consisting of iso-octyl trimethoxysilane, linear alkyl (4 to 8C) trimethoxysilanes (C₄TMS to C₈TMS), and mixtures thereof.

It has been shown that an optimal corrosion protection is obtained when using C₈TMS.

The poly(alkoxysiloxane) may be selected from the group consisting of poly(dimethoxysiloxane) (PDMOS), poly(diethoxysiloxane) (PDEOS), and mixtures thereof.

The bissilane of formula (III) is preferably an organo bis(trialkoxysilane) in which:
- R' is a linear or branched alkyl group having 1 to 6C atoms, preferably R' is a methyl or ethyl group, and
- R¹ is a bivalent group and is a bivalent linear or branched alkyl group (i.e. alkylene group) having 1 to 20C atoms, preferably 4 to 16C atoms, more preferably from 8 to 12C atoms optionally interrupted by at least one heteroatom, selected from among oxygen, sulphur, and nitrogen atoms; a bivalent cycloalkyl group having 3 to 20C atoms, for example 6C atoms (cyclohexyl); a bivalent linear or branched alkenyl group having 1 to 20C atoms such as a bivalent vinyl group; a bivalent aryl group (i.e. arylene group) having 3 to 20C atoms such as a phenyl group (i.e. phenylene group); an -alkylene(1 to 20C)-arylene(3 to 20C)-group; or an -arylene(3 to 20C)-alkylene(1 to 20C)-group; or an -alkylene(1 to 20C)-arylene(3 to 20C)-alkylene(1 to 20C)-group; and R being optionally substituted by one or more substituent selected from the group consisting of halogen atoms, amino groups (NH₂), and SH groups.

R¹ is a bivalent group, i.e. said group is linked on the one hand to a first silicon atom and on the other hand to a second silicon atom.

By bivalent alkyl, alkenyl, aryl or cycloalkyl group is meant a bivalent group derived from the corresponding monovalent alkyl, alkenyl, aryl or cycloalkyl group.

All the alkyl groups may be linear or branched.

In particular, the alkyl or cycloalkyl group of R¹ may be perfluorinated.

The organo bis(trialkoxysilane) may be selected from among the group consisting of 1,6-Bis(trimethoxysilyl)hexane, 1,8- Bis(trimethoxysilyl)octane, 1,2-Bis(trimethoxysilyl)decane, 1,4-Bis(trimethoxysilylethyl)benzene; preferably, the organo bis (trialkoxysilane) is 1,2-Bis(trimethoxysilyl)decane.

The relative proportion by weight of the organofunctional silane of formula (I) to the other silane(s) may be from between 50% by weight and 150% by weight, preferably from 100% by weight and 150% by weight, more preferably 100% by weight.

Preferably, the concentration of the cationic photoinitiator (s) is from 0.5% to 10% by weight, preferably from 0.5% to 5% by weight, more preferably from 0.5% to 3% by weight of the total weight of the composition.

The cationic photoinitiator may be selected from among the group consisting of onium salts, organometallic complexes, and non-ionic photoacids.

The onium salts may be selected from among the group consisting of diaryliodonium salts and derivatives thereof, triarylsulfonium salts and derivatives thereof, and mixtures thereof. Said onium salts have preferably hexafluoroantimonate, hexafluorophosphate or tetrafluoroborate anions. Preferably the onium salts may be selected from among the group consisting of (4-methylphenyl)[4-(2-methylpropyl)phenyl]iodonium hexafluorophosphate, Bis-(4-methyl-phenyl)iodonium hexafluophosphate), Bis(dodecyl phenyl) iodonium hexafluorophosphate, 9-(4-hydroxyethoxyphenyl) thianthrenium hexafluorophosphate, diphenyl iodonium triflate, and mixtures thereof.

The organometallic complexes may be selected from among metallocenium salts, preferably from among ferrocenium salts such as cyclopentadienylcumen-iron hexafluorophosphate.

The non-ionic photoacids may be selected from among the group consisting of alkyl/aryl sulfonic acid, fluorinated sulfonic acids, sulfonimides, tetra-aryl boronic acids, and mixtures thereof.

Examples of such non-ionic photo acids are the products known under the commercial names of PAG 103 and PAG 121.

The cationic photoinitiator may be combined with a sensitizer.

When the composition is a composition containing a high amount of pigment(s), for example from 10% to 50% by weight, preferably from 20% to 30% by weight of the total weight of the composition, then cationic photoinitiators such as substituted triarylsulfonium salts should be used.

Absorption into longer wavelength may be obtained by sensitization with sensitizers such as thioxanthones or anthracenes.

Such compositions, and especially the compositions containing a high amount of pigments, may be used to prepare "DTM" i.e. Direct To Metal coatings comprising a single hybrid sol-gel layer according to the invention directly deposited on a metal or metal alloy surface.

The composition according to the invention may further comprise at least one corrosion inhibitor. However, it should be pointed out that, surprisingly, an outstanding corrosion resistance is obtained even in the absence of any corrosion inhibitor in the composition of the invention.

There is not any limitation on the corrosion inhibitors that may be used in the compositions according to the invention.

Any of the corrosion inhibitors known in the literature may be used in the compositions according to the invention.

Said corrosion inhibitor may be selected from among may be selected from among corrosion inhibitors in the form of pigments (i.e. pigments that also have a corrosion inhibition action or corrosion inhibiting pigments), organic salts, and mixtures thereof.

Preferably, said corrosion inhibitor may be selected from among the group consisting of praseodymium (III) oxide, calcium ion-exchanged synthetic amorphous silica, strontium aluminium polyphosphate hydrate, barium sulfate, zinc nitroisophtalate, antimony tin oxide, organophilized calcium strontium phosphosilicate, organophilized zinc phosphate, zinc molybdate, modified aluminium polyphosphate, molybdenum nanoparticles, β -cyclodextrine, 2-mercaptobenzothiazole, and mixtures thereof; more preferably the corrosion inhibitor may be selected from among the group consisting of Praseodymium(III) oxide, calcium ion-exchanged synthetic amorphous silica, strontium aluminium polyphosphate hydrate, and mixtures thereof.

The concentration of the corrosion inhibitor may be from 1% to 20% by weight, preferably from 5% to 10% by weight of the total weight of the composition.

The composition according to the invention may further comprise at least one wetting agent.

Said wetting agent may be present in an amount of from 0.03% to 5% by weight, preferably from 0.1 to 0.7% by weight.

The wetting agent may be selected from among silicon surface additives; preferably, the wetting agent is a polyether modified polydimethylsiloxane.

The composition according to the invention may further comprise at least one filler.

The composition according to the invention may further comprise at least one dye and/or pigment.

In a specific embodiment the invention is related to a composition for making a hybrid sol-gel layer on a substrate surface comprising:
(i) A radiation curable cationic resin, preferably an epoxy or oxetane resin,
(ii) A combination of at least an organo monosilylated trialkoxysilane of formula IA:

   R - Si(OR')₃ (IA)

   R' being preferably a methyl or ethyl group,
   R being a linear or branched alkyl chain, a cycloalkyl or a phenyl group, which may carry an epoxy, glycidyl function
   and of at least a poly(alkoxysiloxane) and/or a bis-trialkoxysilane, and
(iii) A cationic photoinitiator.

A preferred composition, according to the invention, for preparing a hybrid sol-gel layer on a surface of a substrate comprises:
(i) 2.7% by weight of (4-methylphenyl)[4-(2-methylpropyl)phenyl]iodonium hexafluorophosphate;
(ii) 0.5% by weight of polyether modified polydimethylsiloxane;
(iii) The balance to 100% by weight of diepoxide of the cycloaliphatic alcohol hydrogenated Bisphenol A and C₈TMS (n-octyl trimethoxysilane) and poly(dimethoxy) siloxane in a 60/20/20 weight ratio (wt/wt/wt).

The invention further provides a method according to claims 12 to 15 for preparing a hybrid sol-gel layer on a surface of a substrate wherein:
- A curable composition as disclosed above is deposited on the surface to give a layer of the composition on the surface of the substrate;
- Said layer of the composition is cured by exposure to a radiation, preferably to UV light, and to ambient atmospheric humidity, whereby a hybrid sol-gel layer is obtained on the surface of the substrate.

Advantageously, in a single operation, a layer of the composition is deposited so as to give a hybrid sol-gel layer with a dry thickness from 1 µm to 80 µm, preferably from 5 to 45 µm, more preferably from 10 to 30 µm.

The curable composition may be deposited by any known deposition process, for example by bar coating, roll coating, spraying, sprinkling or dipping.

Preferably the composition is applied by spraying or roll coating in a very simple way similar to the application of a paint or varnish.

The method according to the invention exhibits all of the advantages resulting from the use of the curable composition according to the invention, as described above. In particular, the method according to the invention allows the preparation of layers with a high dry thickness, in a single step, in a single go (a single pass) to replace conversion layers and coats.

The result is a substantial gain in time. By way of example, a film with a dry thickness from 1 µm to 80 µm, preferably from 5 µm to 45 µm, more preferably from 10 µm to 30 µm can be applied in a way similar to the application of a varnish or paint but with a drying time of a few seconds instead of several hours for conventional primer and paint systems. That will permit to reduce drastically the production cycles.

Similarly, it is not necessary with the method of the invention to carry out trickling or prolonged sprinkling in the way described in certain prior-art documents in order to obtain the deposition of a layer of equal thickness. The desired dry thickness of the layer deposited can easily be obtained by modifying, for example, the settings of the gun or guns, the type of gun, the number of these guns, and the application distance. A thick layer is obtained rapidly without prolonged contact or trickling. The thick layer from 1 µm to 80 µm, preferably from 5 µm to 45 µm, and more preferably from 10 µm to 30 µm obtained is of excellent quality, uniform, and without sags.

This method for preparing and applying a hybrid sol-gel layer according to the invention can be easily integrated into a conventional, existing line which includes other treatments of the substrate before or after the preparation of the hybrid sol-gel layer, with substantial gains in productivity.

Curing of the applied layer is achieved without any heating simply by exposure to a radiation such as UV light, thus saving energy. This is also one of the reasons why the compositions of the invention can be used not only to coat elementary parts but also assembled parts (e.g. wings, aircrafts) that may have large sizes and/ or complex shapes. The composition applied to such assembled parts can be easily cured and dried by exposure to a radiation whereas such a curing and drying would not have been possible by heating.

Lastly, the method according to the invention is environmentally compatible and meets the most recent directives relating to environmental protection, owing to the fact that the curable composition is organic solvent free.

Advantageously, said surface is coated only with said hybrid sol-gel layer, preferably containing a dye and/or pigment, therefore forming a monocoat on said surface (no other coating layer being prepared on said surface and no other layer being prepared, deposited on said hybrid sol-gel layer), preferably the substrate is made of a metal or metal alloy and said monocoat is a so-called Direct to Metal Coating "DTM".

The invention is also related to a hybrid sol-gel layer according to claim 16 prepared by the above method.

Said hybrid sol-gel layer generally has a solvent resistance determined according to ISO 2812-1:1993 standard of above 2 hours, preferably of above 24 hours and good adhesion properties (see above).

The invention is also related to a substrate according to claims 17 and 18 comprising at least one surface coated with at least one such hybrid sol-gel layer as disclosed above.

Advantageously, said surface is coated only with said hybrid sol-gel layer (no other coating layer being present), preferably containing at least one dye and/or pigment.

In other words, preferably hybrid sol-gel layer may be applied as mono-coat, colored or not, pigmented or not on the surface of the substrate.

In that case, said hybrid sol-gel layer may replace 2, 3 or even 4 layers or coats, for example, anodisation or conversion or chromate layers or coatings, anti-corrosion primers, and even decorative paint coatings.

In other words such a single hybrid sol-gel layer may be used alone as anti-corrosion, protective, and possibly decorative coatings.

Such a single hybrid sol-gel layer therefore forms a mono-coat on the surface of the substrate, more preferably made of a metal or a metal alloy, said mono-coat is a so called Direct-To-Metal coating or DTM.

Said substrates may be, or may be part of, an aircraft, such as a plane, a seaplane, a flying boat, an helicopter; an aerospace vehicle; a marine vessel; an offshore platform; a motor vehicle such as a car.

The invention relates furthermore to the use according to claims 19 and 20 of said hybrid sol-gel layer prepared by the method according to the invention for imparting corrosion resistance to a surface of a substrate, in particular to a surface of a substrate made of a material selected from metals such as aluminium, metal alloys such as aluminium alloys, and composite materials comprising a metal or a metal alloy.

Preferably, the substrate is made of aluminium or of an aluminium alloy and the hybrid sol-gel layer imparts a corrosion resistance to the surface in the salt spray test, according to NF EN ISO 9227:2007standard, of above 1000 hours, preferably of above 2000 hours, and more preferably of above 3000 hours.

Advantageously, said surface is coated only with said (cured) hybrid sol-gel layer; in other words, said hybrid sol-gel layer is used alone, as a single layer (monocoat), on the surface.

In other words, said hybrid single sol-gel layer forms a so-called "monocoat" on said surface.

When said surface is a metal or metal alloy surface, such a monocoat is called a "DTM" (Direct To Metal) coating.

Said "DTM" hybrid sol-gel coating provides very high corrosion and protection properties and possibly decorative properties (e.g. when the layer comprises a pigment or dye) to the substrate.

The reason for this is that it has been found that the hybrid sol-gel layer according to the invention, or prepared by the method according to the invention, makes it possible, surprisingly, alone, by itself -without any other layer such as a layer of primer or paint being used- to impart at the same time corrosion resistance, protection against chemical and scratch stress or/and decorative function to said surface such as a metal or metal alloy surface.

This makes it possible to avoid the deposition of further layers in addition to the hybrid sol gel layer, and results in saving money, time and weight, which is of particular interest, for example, in the aerospace field.

Finally, the method according to the invention is therefore simple, reliable, rapid and less costly than the prior-art methods because a single coating step and a single coat could replace several ones.

However, the invention further also provides a method according to claims 21 to 22 for preparing a coating comprising two or more layers on a surface of a substrate, at least one of these layers being a hybrid sol-gel layer prepared by the method as described above.

In particular the invention additionally provides a method for preparing a coating comprising two or more layers on a surface of a substrate, wherein:
- A first hybrid sol-gel layer is prepared on said surface; then
- One or more other layer(s) (also called "overcoat(s)") is (are) applied to said hybrid sol-gel layer, said other layer(s) being selected, for example, from anti-corrosive primer, decorative paint, top coat, clear coat, sealant, adhesive, and resin layers.

Said layer or layers other than the first hybrid sol-gel layer may be applied to the first hybrid sol-gel layer immediately after its preparation, i.e. immediately after the application and curing steps, or else said layer or layers may be applied to the hybrid sol-gel layer within a certain time after its preparation, for example a time of several days (e.g. 2, 3, 4, 5, 10) or months (e.g. 2, 3, 4, 5, 10), to ten years.

The reason for this is that, since the first hybrid sol-gel layer by itself possesses anti-corrosion properties, it is unnecessary to provide it with other layers straight away.

The hybrid sol-gel coating protects the substrate of any corrosion which could occur during the manufacturing cycle of elementary parts or of assembled parts such as a plane, before painting.

Moreover, due to its mechanical resistance, the hybrid sol-gel layer, film also protects the substrate from scratch.

In the case of local repairing operations, the curable composition according to the invention may be applied to the area to coat (repair) and then exposed to UV lamp.

An intermediate layer or "intercoat" may optionally be provided on the first hybrid sol-gel layer to tailor and optimise the compatibility of the hybrid sol-gel layer with the other layer(s), overcoat(s).

Thus, a reactive inter-coat may possibly be applied to the hybrid sol-gel layer to allow a good adhesion / wettability of the other layer(s) such as primers or paints coats even after a period of time more or less long between the sol gel cure and the subsequent overcoat by primers or paints systems. Said other layer(s) is (are) preferably also hybrid sol-gel layer(s) prepared by the method according to the invention.

Thus, it is also possible to deposit two or more hybrid sol-gel layers so as to form a multi-layer coating, each layer having a composition different from the preceding layer and from the following layer, and each deposited layer exhibiting different properties, selected from the properties set out below.

Generally speaking, it is possible to deposit e.g. from 1 to 5 hybrid sol-gel layers, preferably from 2 to 3 hybrid sol-gel layers.

The coating may therefore comprise, preferably consist of, two or more identical or different hybrid sol-gel layers according to the invention selected, for example, from the hybrid sol-gel layers having the particular properties described later on below, and optionally one or more other layers selected, for example, from paint, primer, mastic, adhesive or resin layers.

The invention will be better understood from a reading of the detailed description below, which is given essentially in relation to the process of preparing a hybrid sol-gel layer on a surface of a substrate.

### DETAILED DESCRIPTION OF THE INVENTION.

This process first comprises the deposition on said surface of a curable composition for the purpose of obtaining a hybrid sol-gel layer on the surface of the substrate.

The substrate according to the invention may be any material capable of receiving a hybrid sol-gel layer. The process according to the invention is applied to very diverse materials with excellent results in terms of the properties of the resulting layer.

The substrate is generally made of a material selected from metals; metal alloys; organic or inorganic glasses; organic polymers such as plastics; wood; ceramics; textiles; concretes; papers; stone; carbon fibres and carbon fibres composites; and composite materials comprising two or more of the aforementioned materials; these materials being optionally plated and/or surface-treated and/or coated, for example painted.

The material of the substrate may in particular be selected from aluminium; titanium; copper; iron; magnesium; and alloys thereof, such as steels, for example stainless steels, aluminium alloys and Inconel; the surface of the substrate being optionally plated and/or surface-treated and/or coated, for example painted.

The aluminium alloys include the grades 6056, 2024 and 7075.

The titanium alloys include the alloys Ti6-4, Ti-15-3-3-3, Ti-6-2-2-2-2 and Ti-3-2.5.

The substrate may take any form whatsoever, but generally takes the form of a plate, sheet, panel or foil. The process according to the invention, however, allows layers to be deposited on surfaces even of highly complex geometry. The surface on which the layer is deposited may be only part of the total surface of the substrate, but may also be the entirety of said surface; for example, with the process according to the invention, a layer can be deposited on both faces of a foil substrate.

Before the deposition of the composition on the surface, it is generally preferable to clean and/or activate and/or pickle the surface, for example by a chemical and/or physical and/or mechanical treatment.

This is because such cleaning is important in order to obtain effective adhesion of the layer which is deposited. These cleaning processes are known to the skilled person: they may involve cleaning by a wet method, for example by acidic or basic solutions, or alkaline or solvent degreasing, or else cleaning by a dry method, for example by shotblasting and/or sandblasting and/or flaming (flame treatment).

For certain supports a particular treatment of the adhesion-promoting type may be added.

Cleaning and/or activating treatments of this kind are known to the skilled person and are widely described in the prior art.

On the surface, preferably cleaned and activated, a curable composition is deposited which is, according to the invention, a curable composition comprising:
(i) At least one radiation curable (i.e. polymerizable and/or crosslinkable) material capable of being polymerized and/or crosslinked by a cationic polymerization reaction upon exposure to a radiation, said radiation polymerizable component comprising at least two, preferably two, cationically polymerizable functional groups;
(ii) A combination of at least one organofunctional silane of formula (I):

   R₍₄₋ₘ₎ - Si-(OR')ₘ (I)

   in which:
   - m is a number between 1 and 3;
   - OR' is an hydrolysable group, and
   - R is a hydrocarbyl group optionally containing at least one heteroatom, selected from among oxygen, sulphur, and nitrogen atoms;
   and of at least one other silane selected from among the group consisting of poly(alkoxy siloxane) (II) wherein the alkoxy group has from 1 to 20C and a bissilane of formula (III) :

   R¹[-Si(OR')₃]₂ (III)

   in which:
   - OR' is an hydrolysable group, and
   - R¹ is a divalent hydrocarbyl group optionally containing at least one heteroatom, selected from among oxygen, sulfur, and nitrogen atoms,
      and mixtures thereof;
      and
(iii) At least one cationic photoinitiator.

The first essential component of the curable composition according to the invention is a radiation curable (material capable of being polymerized and/or crosslinked by a cationic polymerization reaction upon exposure to a radiation, or more simply a "cationically radiation-curable material").

By radiation curable material is meant a material such as a resin that is radiation polymerizable and crosslinkable i.e. a material that polymerizes and/or crosslinks upon exposure to a radiation.

Said radiation is preferably a UV light, and said material is then called a photopolymerizable material, e.g. resin.

Said radiation polymerizable and/or crosslinkable material, such as a resin, comprises at least two, cationically polymerizable functional groups, preferably said material comprises from 2 to 5 cationically polymerizable functional groups, e.g. 2, 3, 4, or 5 cationically polymerizable functional groups, more preferably 2 functional groups.

Said cationically polymerizable functional groups may be selected from among cyclic ether groups such as epoxy, and oxetanyl groups, and vinyl ether functional groups. Preferably, said epoxy groups are part of a glycidyl or glycidyloxy group.

Said radiation curable material is usually called a resin, and may be a polymer, oligomer, or pre-polymer.

As mentioned above said radiation curable resin, may be selected from the group consisting of cationically curable epoxy resins and cationically curable oxetane resins.

By cationically radiation curable epoxy resin, we generally mean a resin which is constituted of monomers or oligomers bearing at least one epoxide reactive group.

By cationically radiation curable oxetane resin, or 1,3-propylene oxide, we generally mean a heterocyclic organic compound with the molecular formula C₃H₆O, having a four-membered ring with three carbon atoms and one oxygen atom.

The term oxetane may also refer more generally to any organic compound containing an oxetane ring.

Oxetane resin may be but are not limited to 1,3-epoxypropane, oxacyclobutane, trimethylene oxide.

Examples of cationically radiation curable epoxide and oxetane resins are provided in Table I below:

**TABLE I.**

| Commercial name | Chemical name | Chemical structure |
|---|---|---|
| Aldrich 220892 | 1,4-Butanediol diglycidyl ether | 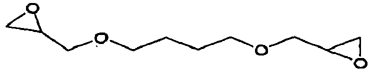 |
| Epalloy 5000 | Diepoxide of the cycloaliphatic alcohol hydrogenated Bisphenol A | 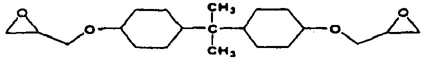 |
| UVACURE1500 | (3,4-Epoxycyclohexane) methyl 3,4-epoxy cyclohexyl carboxylate | 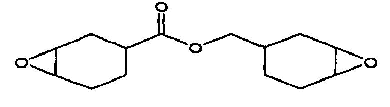 |
| Aldrich 338028 | 1,4-Cyclohexane dimethanol diglycidyl ether | 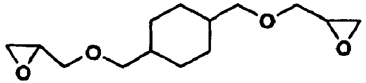 |
| S182 | Tetrahydrophthalic acid diglycidyl ester | 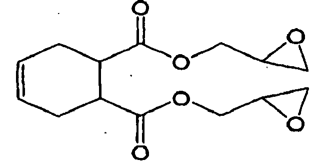 |
| Aldrich 470945 | Resorcinol diglycidyl ether | 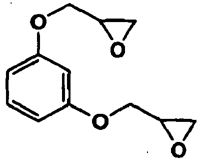 |
| Aldrich 703672 | Bis[4-(glycidyloxy)phenyl] methane | 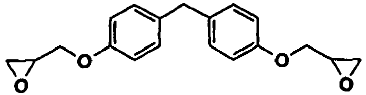 |
| DER 331 | Reaction product of epichlorohydrin and bisphenol A | 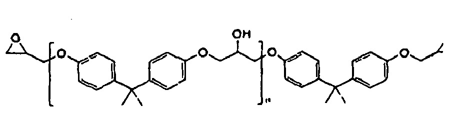 |
| S500 | N,N-diglycidyl-4-glycidyloxy aniline | 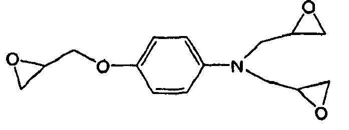 |
| S186 | 4,5-Epoxy-tetra-hydrophthalic acid diglycidyl ester | 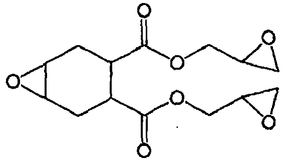 |
| Aldrich 413305 | Tris(4-hydroxyphenyl) methane triglycidyl ether | 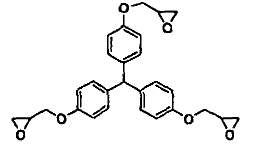 |
| S400 | Pentaerythritol tetraglycidyl ether | 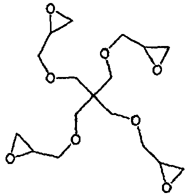 |
| Aldrich 412805 | 4,4'-Methylenebis(N,N-diglycidylaniline) | 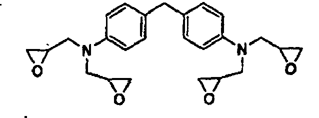 |
| VCMX | | 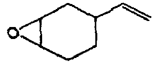 |
| Rapi-cure HBVE | 4-Hydroxybutyl vinyl ether | 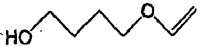 |
| Rapi-cure DVE3 | Triethyleneglycol divinyl ether | 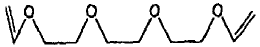 |
| TMPO | 3-ethyl-3-hydroxymethyl oxetane | 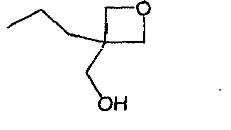 |
| DOX | Bis[1-ethyl(3-oxetanyl)] methyl ether | 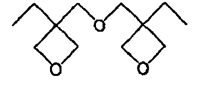 |

Epalloy^{®} 5000, S 400, DOX and TMPO give the best results having regard to the corrosion resistance of the hybrid sol-gel layer (SST).

The second essential component of the curable composition according to the invention is a silane of formula (I):

R₍₄₋ₘ) - Si-(OR')ₘ (I)

in which:
- m is a number between 1 and 3;
- OR' is an hydrolysable group; and
- R is a hydrocarbyl group optionally containing at least one heteroatom, selected from among oxygen, sulphur, and nitrogen atoms.

In the silane of formula (I) m may be any number from 1 to 3, e.g. 1, 2, or 3. Although it will be appreciated that, in any single molecule, the number must be an integer, in practice, unless the material used is a pure single compound, the number may be non-integral. Preferably m is 3.

In the silane of formula (I), OR' represents a hydrolysable group, preferably an alkoxy group and more preferably an alkoxy group having from 1 to 6 carbon atoms and the silane of formula (I) is then called e.g. an organomono(trialkoxysilane) when m is 3.

Still more preferably the alkoxy group is a linear group.

A hydrolysable group is a group which undergoes separation or is removed from the Si atom when the silane is contacted with water (hydrolysis), and which does not remain attached to the metal atom. Said water is not added water but simply moisture that is present in the ambient atmosphere.

Examples of suitable alkoxy groups OR' include the methoxy, ethoxy, propoxy, isopropoxy, butoxy, isobutoxy, t-butoxy, pentyloxy, and hexyloxy groups. Among said alkoxy groups, the methoxy or ethoxy group is preferred, since longer alkoxides have very low reactivity for hydrolysis reactions. The methoxy group is the most preferred alkoxy group because methoxysilanes are more reactive than ethoxysilanes.

In the silane of formula (I) R is a hydrocarbyl group optionally containing at least one heteroatom, selected among oxygen, sulfur, and nitrogen atom.

R is a linear or branched alkyl group having 1 to 20C atoms , preferably 4 to 16C atoms, more preferably from 8 to 12C atoms optionally interrupted by at least one heteroatom, selected among oxygen, sulphur, and nitrogen atoms , a cycloalkyl group having 3 to 20C atoms, for example 6C atoms, a linear or branched alkenyl group having 1 to 20C atoms such as a vinyl group, an aryl group having 3 to 20C atoms such as a phenyl group, an alkyl (1 to 20C)-aryl (3 to 20C) group, or an aryl (3 to 20C)-alkyl(1 to 20C) group, and R being optionally substituted by one or more substituent selected from the group consisting of halogen atoms, amino groups and SH groups.

In particular, the alkyl or cycloalkyl group of R may be perfluorinated. Examples of organo mono (trialkoxysilane) of formula (I) (OR' being an alkoxy group) are given in Table II below:

**TABLE II.**

| Chemical name | Chemical structure |
|---|---|
| Phenyl trimethoxysilane | 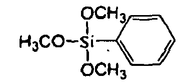 |
| Cyclohexyl trimethoxysilane | 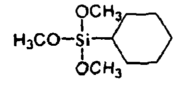 |
| Iso-Butyl trimethoxysilane | 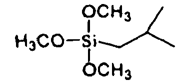 |
| Iso-Octyl trimethoxysilane | 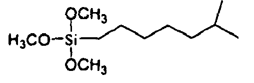 |
| Linear alkyltrimethoxysilane From C1 to C18 (C*n*TMS) | 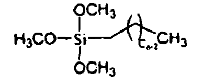 |
| Vinyl trimethoxysilane | 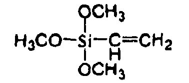 |
| 3-aminopropyl trimethoxysilane | 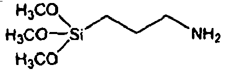 |
| 3-mercaptopropyl trimethoxysilane | 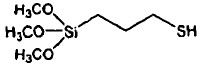 |

The linear alkyltrimethoxysilanes C₈TMS, C₁₀TMS and C₁₂TMS give the best results having regard to the corrosion resistance of the hybrid sol-gel layer) (SST test), with C₈TMS being most preferred.

The third essential component of the curable composition according to the invention is another silane (i.e. a silane that is different from the silane of formula (I)).

Said other silane is selected from among the group consisting of poly(alkoxy siloxane) (II) wherein the alkoxy group has from 1 to 20C, and a bissilane of formula (III)::

R¹[-Si(OR')₃]₂ (III)

in which:
- OR' is an hydrolysable group; and
- R¹ is a bivalent hydrocarbyl group optionally containing at least one heteroatom, selected from among oxygen, sulfur, and nitrogen atoms;
and mixtures thereof.

The poly(alkoxy siloxane) and the bis(trialkoxysilane) may be called "Crosslinking agents.

The poly(alkoxysiloxane) may be selected from the group consisting of poly (dialkoxysiloxane), the alkoxy group generally having from 1C to 4C such as poly(dimethoxysiloxane) (PDMOS) and poly(diethoxysiloxane) (PDEOS); and mixtures thereof.

Said poly(alkoxysiloxane) are generally selected from among the poly(alkoxysiloxane) oligomers.

The bissilane of formula (III) is preferably an organo bis(trialkoxysilane) in which:
- R' is a linear or branched alkyl group having 1 to 6C atoms preferably R' is a methyl or ethyl group, and
- R¹ (bivalent group) is a linear or branched alkyl group (i.e. alkylene group) having 1 to 20C atoms , preferably 4 to 16C atoms, more preferably from 8 to 12C atoms optionally interrupted by at least one heteroatom, selected from among oxygen, sulphur, and nitrogen atoms; a bivalent cycloalkyl group having 3 to 20C atoms, for example 6C atoms (cyclohexyl); a bivalent linear or branched alkenyl group having 1 to 20C atoms such as a bivalent vinyl group; a bivalent aryl group (i.e. arylene group) having 3 to 20C atoms such as a phenyl group (i.e. phenylene group); an -alkylene(1 to 20C)-arylene(3 to 20C)-group; or an -arylene(3 to 20C)-alkylene(1 to 20C)-group; or an -alkylene(1 to 20C)-arylene(3 to 20C)-alkylene(1 to 20C)-group; and R being optionally substituted by one or more substituent selected from the group consisting of halogen atoms, amino groups (NH₂), and SH groups.

In particular, the alkyl or cycloalkyl group of R¹ may be perfluorinated.

Examples of polyalkoxysilanes are given in Tabie III below:

**TABLE III.**

| Commercial name | Chemical name | Chemical structure |
|---|---|---|
| PDMOS | Poly(dimethoxy siloxane) | 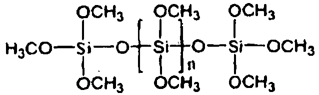 |
| PDEOS | Poly(diethoxy siloxane) | 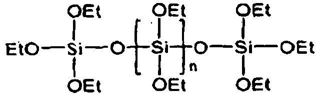 |

In the formula of PDMOS and PDEOS n is preferably an integer from 1 to 5, i.e. said PDMOS and PDEOS are oligomers, more preferably n =5.

PDMOS, especially with n = 5, gives the best results having regard to corrosion resistance (SST) and solvent resistance.

Examples of bis(silanes) are given in TABLE IV below:

**TABLE IV**

| Chemical name | Chemical Structure |
|---|---|
| 1,6-Bis(trimethoxysilyl)hexane | 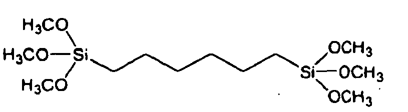 |
| 1,2-Bis(trimethoxysilyl)decane | 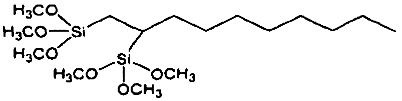 |
| 1,4 Bis(trimethoxysilylethyl) benzene | 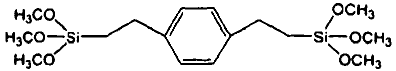 |

Other bissilanes are 1,8-Bis(trimethoxysilyl) octane (Bis C₈TMS) and 1,8-Bis(triethoxysilyl)octane (Bis C₈TES).

1,2-Bis (trimethoxysilyl)decane (Bis C₁₀TMS) gives the best results having regard to corrosion and solvent resistance.

The fourth essential component of the curable composition according to the invention is a cationic photoinitiator.

By cationic photoinitiator is generally meant a compound that upon irradiation, e.g. UV irradiation, dissociates into two or more components, one of which is a strong acid that can initiate the polymerization of both the silanes and of the radiation curable resin.

Examples of cationic photoinitiators are the so-called onium salts such as the diazonium, iodinium and sulphonium salts.

Other examples of cationic photoinitiators are the organometallic complexes such as the metallocenium salts, for example the ferrocenium salts.

Said salts also contain a negatively charged counterion such as BF₄⁻, PF₆⁻, SBF₆⁻, AsF₆⁻ etc.

It might be necessary to use sensitizing molecules to enhance the sensitivity of the photoinitiator to the UV wavelengths emitted by the UV lamp.

The cationic photoinitiator may also be selected from among the non-ionic photoacids.

The onium salts may be selected from among the group consisting of diaryliodonium salts and derivatives thereof, triarylsulfonium salts and derivatives thereof, and mixtures thereof.

Said onium salts have preferably hexafluoroantimonate, hexafluorophosphate or tetrafluoroborate anions.

Preferably the onium salts may be selected from among the group consisting of (4-methylphenyl)[4-(2-methylpropyl)phenyl]iodonium hexafluorophosphate, Bis-(4-methylphenyl)iodonium hexafluorophosphate), Bis(dodecyl phenyl) iodonium hexafluorophosphate, 9-(4-hydroxyethoxyphenyl) thianthrenium hexafluorophosphate, diphenyl iodonium triflate, and mixtures thereof.

The organometallic complexes may be selected from the metallocenium salts, preferably ferrocenium salts such as cyclopentadienylcumen-iron hexafluorophosphate.

The non-ionic photoacids may be selected from among the group consisting of alkyl/aryl sulfonic acid, fluorinated sulfonic acids, sulfonimides, tetra-aryl boronic acids, and mixtures thereof.

Examples of such non-ionic photo acids are the products known under the commercial names of PAG 103 and PAG 121.

Examples of cationic photoinitiators are given in Table V below:

**TABLE V.**

| Commercial name | Chemical name | Chemical structure |
|---|---|---|
| IRGACURE 250 | (4-methylphenyl)[4-(2-methylpropyl)phenyl]iodonium hexafluorophosphate | 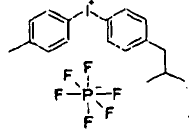 |
| | | 75 wt% in propylene carbonate |
| Bluesil PI 2074 | (4-(1-methylethyl)phenyl)(4-methylphenyl)iodonium tetrakis (pentafluorophenyl) borate (1-) | 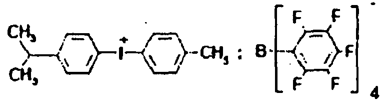 |
| DEUTERON UV 2257 | Bis-(4-methyl-phenyl)iodonium hexafluorophosphate | 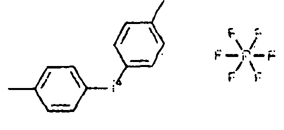 |
| | | 50 wt% in propylene carbonate |
| UV 1241 | Bis(dodecyl phenyl) iodonium hexafluorophosphate | 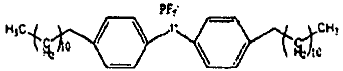 |
| | | 50 wt% in C₁₂/C₁₄ Glycidylether |
| Esacure 1187 | 9-(4-hydroxyethoxyphenyl) thianthrenium hexafluorophosphate | 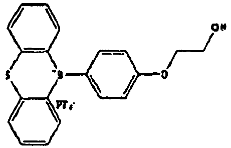 |
| | | 75 wt% in propylene carbonate |
| Sigma Aldrich 530972 | diphenyl iodonium triflate | 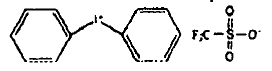 |
| PAG 103 | Non-ionic photoacid | 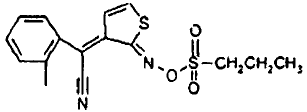 |
| PAG 121 | Non-ionic photoacid | 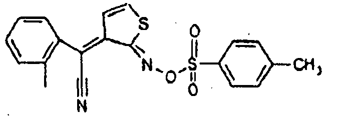 |

Irgacure^{®} 250, BLUESIL^{®} PI2074, DEUTERON^{®} UV 2257 and DEUTERON^{®} UV 1241 give the best results having regard to corrosion protection (SST).

The four components recited above are the essential components of the sol according to the invention, and form a base composition to which, depending on the requirements and the desired properties, it is possible to add one or more additional, optional components, which are described below.

The hybrid sol gel layer prepared by using the curable composition according to the invention has outstanding corrosion resistance properties even without including any anti-corrosion additive or corrosion inhibitor.

In other words, a hybrid sol-gel layer prepared from a composition according to the invention free of any corrosion inhibitor already has excellent corrosion resistance properties as assessed by the Salt Spray Test according to NF EN ISO 9227:2007.

However, the curable composition according to the invention may further comprise at least one corrosion inhibitor to further improve the corrosion resistance of the hybrid sol-gel layer prepared from the composition.

By corrosion inhibition in the context of the present invention, it is meant a chemical compound that decreases the corrosion rate of a material e.g. in the Salt Spray Test according to NF EN ISO 9227:2007.

Said corrosion inhibitor may be selected from among corrosion inhibitors in the form of pigments (i.e. pigments that also have a corrosion inhibition action or corrosion inhibiting pigments) and organic salts. Corrosion inhibiting pigments are preferred.

Examples of corrosion inhibitors in the form of pigments and of organic salts are given in TABLES VI and VII below.

**TABLE VI**

| Commercial name of the corrosion inhibitors in the form of pigments | Manufacturer | Chemical Nature |
|---|---|---|
| | | |
| Shieldex AC5, Shieldex AC3 | GRACE | calcium ion-exchanged, synthetic amorphous silica |
| Novinox PAS | SNCZ | Modified aluminium polyphosphate |
| Nubirox 106 | NUBIOLA | Organophilized zinc phosphate and zinc molybdate |
| Nubirox 302 | NUBIOLA | Organophilized calcium strontium phosphosilicate |
| Zelec 1410T, Zelec 3410T | MILLIKEN | Antimony Tin Oxide (ATO) complex |
| Pr₂O₃ | SIGMA ALDRICH | Praseodynium (III) oxyde |
| Heucophos SRPP | HEUBACH | strontium aluminium polyphosphate hydrate |
| Heucorine RZ | HEUBACH | Zinc-5-Nitroisophthalate |
| Heucophos SAPP | HEUBACH | strontium aluminium polyphosphate hydrate |
| Albawhite 70 | SACHTLEBEN | barium sulfate |
| SrTiO₃ | SIGMA ALDRICH | strontium titanate |
| Mo | SIGMA ALDRICH | Molybdenum nanoparticles |

**TABLE VII**

| ORGANIC corrosion inhibitors | | |
|---|---|---|
| Commercial name | Manufacturer | Chemical Nature |
| β -cyclodextrine | SIGMA ALDRICH | β-cyclodextrine |
| | | |
| | | 2-Mercaptobenzothiazole |

Surprisingly some of said corrosion inhibitors such as Shieldex^{®} AC3 and ZELEC^{®} 1410T shows a kind of synergistic effect and improve in an unexpected manner the corrosion resistance properties.

The concentration of the corrosion inhibitor may be from 1% to 20% by weight, preferably from 2.5% to 10% by weight, more preferably from 5% to 10% by weight of the total weight of the curable composition.

The composition according the invention may further comprise at least one wetting agent.

The wetting agent may be present in an amount of from 0.03% and 5% by weight, preferably from 0.1% and 0.7% by weight of the total weight of the curable composition.

The wetting agent may be selected from among silicon surface additives; preferably, the wetting agent is a polyether modified polydimethylsiloxane.

An example of such a wetting agent is BYK^{®} 333.

By wetting agent is meant a surfactant that lowers the surface tension of the liquid curable composition according to the invention, rather the interfacial tension between the curable composition and the substrate surface.

The wetting agent improves the mixing of the various components of the composition and the adherence of the hybrid sol-gel coating to a metal surface or any other smooth surface.

The wetting agent enhances the wetting and spreading properties on various substrates, but also the quality of the network formed and the intrinsic anti-corrosion properties of the hybrid sol-gel film.

The improvement in wetting by addition of suitable wetting agents allows uniform films to be obtained without popping phenomena or phenomena of shrinkage on drying, on correctly prepared surfaces. The possible anti-corrosion properties of the wetting agent may then reinforce the quality of the protection .The composition may further comprise at least one filler preferably selected from micas, silicas , talcs, clays, PTFE powders, and so on which, by virtue of their structure, for example their lamellar or nodular structure, and/or of their size, for example micro or nano size, may optimize certain properties, such as the anti-sagging, hardness, scratch test resistance, anti-corrosion, properties of the hybrid sol-gel film.

The filler such as a talc, mica, silica or clay is generally in the form of particles, or nanoparticles whose surface may be modified.

The filler may be present in an amount of 1% to 20% by weight, preferably of 3% to 10% by weight of the total weight of the curable composition.

The curable composition according to the invention may further comprise one or more conductive materials selected, for example, from salts, electrolytes, redox couples, conductive pigments and conductive polymers e.g. of polyaniline type, ferrocenes, sulfurated polystyrene, carbon blacks, and all of the other compatible products having the characteristic of conducting electrical charges.

The curable composition according to the invention may further comprise at least one dye and/or at least one pigment. Pigments also include nacres, lakes and mixtures thereof.

The dye may be used as an indicator of the suitable application of the wet layer and/or of the suitable curing after complete bleaching under light curing.

The pigments may be selected from decorative pigments and pigments used to enhance the conductivity and/or reflectivity of the film.

As already mentioned above, some pigments may also play the role of corrosion inhibiting agents.

Said dye(s) and/or pigment(s), may be present in an amount of 0.01% to 40% by weight, preferably of 0.05 to 20% by weight of the total weight of the composition.

The composition according to the invention is a 1-K formulation. In other words, the components making up the composition are not stored separately and only mixed shortly before use. The composition can be stored for a long period of time without of course being exposed to a radiation such as an UV light.

The deposition of the curable composition on the surface, which preferably has been cleaned and/or activated beforehand, may be accomplished by any technique known to the skilled person, such as bar coating, roll coating, spraying, sprinkling or dipping. The preferred techniques are the spraying or roll coating techniques.

The operation of depositing, applying, the curable composition to the surface is generally carried out at room, ambient temperature e.g. from 10°C to 30°C, preferably from 15°C to 25°C, more preferably from 20°C to 23°C.

After deposition, a substrate is obtained whose surface is coated with a layer of the curable composition.

This hybrid layer is subsequently cured by exposure to a radiation, preferably to UV light in a way known in this field of the art, for example by using a UV lamp and a UV conveyor. In the same time, the sol-gel reaction proceeds due to ambient atmospheric humidity.

The light intensity is generally from 2 to 20 J/cm²

It is possible to deposit only a single hybrid sol-gel layer by the method according to the invention; this sol-gel layer generally has a dry thickness of from 1 µm to 80 µm, preferably from 5 to 45 µm, more preferably-from 10 to 25 or 30 µm.

This layer generally has a thickness greater than that of the sol-gel layers of the prior art prepared from diluted sols, namely a dry thickness of 0.1 to 0.4 µm, preferably of 0.2 to 0.3 µm.

It is also possible to deposit two or more hybrid sol-gel layers according to the invention so as to form a multi-layer coating, each layer having a composition different from the preceding layer and from the following layer, and each deposited layer exhibiting different properties, selected from the properties set out below.

Generally speaking, it is possible to deposit from 1 to 5 layers, preferably from 2 to 3 layers.

According to the various additives incorporated in the curable composition, the deposited hybrid sol-gel layer will be able to possess a variety of properties.

The skilled person is easily able to determine what additive or additives should be incorporated, where appropriate, into the composition according to the invention, which compulsorily comprises the components mentioned above, in order to obtain hybrid sol-gel layers which possess the properties below. Thus it will be possible to prepare anti-scratch; anti-abrasion; anti-friction; anti-fog; anti-static; anti-reflection; electroluminescent; photovariable; conducting (high and low K); superconducting; ferroelectric (piezoelectric and pyroelectric); barrier (to gases; to bases, to acids, to various chemical products, including strippers, hydraulic fluids such as "Skydrol"); soil-repellent; thermochromic; luminescent; non-linear optical; flame-retardant; sol-gel coating for composites; anti-adherent (adhesive resistant); insulating; anti-fouling; primer; paint; hydrophobic; hydrophilic; porous; biocidal; anti-odour; mold release agent and antiwear hybrid sol-gel layers, etc. According to the invention, it is also possible to prepare a multi-layer coating exhibiting any combination of properties from among those set out above.

The invention will now be described with reference to the examples which follow, and which are given by way of illustration and not of limitation.

### EXAMPLES.

In the following experimental examples, radiation curable compositions, formulations according to the invention are prepared, said compositions are deposited as films, on a surface of substrates, namely the surface of aluminium panels, said films are then cured and the properties of the hybrid sol-gel films according to the invention so prepared are evaluated.

### 1. Preparation of the radiation curable compositions

The radiation curable formulations are prepared by mixing the radiation curable cationic resin (s) with the silane compound of formula (I), the poly(alkoxy siloxane) and/or the bis(trialkoxysilane).

The solution is stirred for about 10 minutes, then the cationic photoinitiator and, if required the wetting agent, are added.

The solution is stirred, at least, for 30 minutes.

When corrosion inhibitor(s) are used, the formulations are prepared by first mixing the resin with the corrosion inhibitor(s). The solution is magnetically stirred at least 30 min. Then the silane compound of formula (I), the poly(alkoxy siloxane) and/or the bis(trialkoxysilane) are added and the solution is stirred for 10 min, then the cationic photoinitiator and, if required, the wetting agent, are added. The solution is stirred, at least, for 30 minutes.

After completion of the mixing of the components the formulation could be applied within 30 minutes.

### 2. Substrates.

The substrates are 2024 T3 aluminium alloys panels.

### 3. Substrate preparation.

The copper added in the 2024 aluminium alloy tends to deteriorate the protective layer of the natural oxide layer. Consequently it is crucial to prepare the surface of the aluminium panels to eliminate superficial contaminants, to eliminate oxides which could interfere with the finishing steps.

Thus, the Aluminium alloy panels (2024 T3) are, first, cleaned of superficial dust with DIESTONE DLS. Then, the panels are degreased in a 10 vol. % SOCOCLEAN A 3431 bath at pH 9 under stirring for 15 min at 45 °C. The panels are then rinsed twice. The first rinse is performed in tap water for two minutes and the second rinse is performed in distilled water for two minutes.

The second surface treatment is an etching treatment in a SOCOSURFA1858/SOCOSURF A1858 (40/10 vol% / vol%) bath under stirring. The panels are 30 dipped in the bath for 10 min at 52°C. The panels are rinsed twice in distilled water and dried for a few minutes at 60°C. The panels have to be used within the next 24 hours.

### 4. Application of the formulations to the aluminium alloy substrates.

The films were prepared by applying the formulations onto the aluminium alloy substrates using an automatic film applicator equipped with a 26 µm wire wound bar.

### 5. Photopolymerization.

The photocuring, UV curing process is performed on an ultraviolet conveyor with a belt speed of 10m/min for 5 successive passes using a Fusion lamp (H lamp, light intensity: ca 10 J/ cm²).

The thicknesses of the cured film could vary from 1 to 80 micrometers, preferably from 5 and 45 micrometers.

The samples i.e. the aluminium alloy panels coated with a cured hybrid sol-gel layer are then ready for a technical characterization.

### 6. Characterization of the samples.

### - Thickness:

The average deposited thickness of the cured film, layer, is measured according to the ISO 2360:2003standard using an ELCOMETER^{®} 355 apparatus fitted with the N4 probe for aluminium panels (measurements based on Eddy current).

Three measurements are performed, namely at the top, in the middle, and at the bottom of the panels. The average thickness is noted.

### - Solvent Resistance:

The solvent resistance is evaluated according to the ISO 2812-1:1993 standard. The coated panel is exposed to solvents at room temperature by full immersion.

The solvent used for this test is a mixture of toluene, butyl acetate and methylethylketone in proportion 1/3, 1/3 and 1/3 respectively.

The chemical resistance is high if no blistering, cracking, destruction of the coating is observed after 2 hours.

### - Salt Spray test ("SST"):

Salt Spray Test (SST) is used for assessment of the corrosion resistance of metallic materials. This test is performed according to the NF EN ISO 9227:2007standard.

The coated aluminium alloy panels to be tested are placed into a cabinet (a Q-FOG Cyclic Corrosion tester climatic chamber from Q-Panel) at 35 °C ± 2°C on racks with an angle of 20° ± 5° from vertical. They are exposed to an artificial fog composed of a sodium chloride solution. This solution has to contain 50 g/L ± 5 g/L of sodium chloride and its pH shall be 6.5 to 7.2 at 25C°C±5°C. All the tests were performed in a SST apparatus conform to the NF EN ISO 9227:2007standard. The panels were observed regularly and every apparition of corrosion (uniform corrosion, pits, "worms"...) was noted. The final requirement for resistance to SST is 3000h exposure.

### - Cross - cut test:

Cross - cut Test (SST) is performed according to the ISO 2409:2007 standard.

### Example 1.

In this example, aluminium alloy panels coated with a cured hybrid sol-gel layer are prepared by the procedure outlined hereinabove using the following inventive radiation curable formulation (Formulation 1):

### Formulation 1:

- Cationic curable resin: Epalloy^{®} 5000 / Diepoxide of the cycloaliphatic alcohol
- Hydrogenated Bisphenol A (55.30 wt%);
- Organo mono(trialkoxysilane): C8TMS (n-octyl trimethoxysilane) (18.5 wt%);
- Poly(alkoxysiloxane): PDMOS / poly(dimethoxy siloxane) with n = 5 (18.5 wt%);
- Cationic photoinitiator: 1250 / (4-methylphenyl) [4-(2-methylpropyl) phenyl] iodonium hexafluorophosphate (2.7 wt%);
- Corrosion inhibitor: 5% wt Shieldex^{®} AC3.

The same results are obtained when changing Shieldex^{®} AC3 to Pr₂O₃.

Characterization results of the samples prepared using this Formulation 1:
- Thickness (ISO 2360:2003): 20-28 µm;
- Solvent resistance (ISO 2812-1:1993): > 2 hours;
- SST Tests (NF EN ISO 9227:2007): > 2000 hours;
- Cross-cut Test (ISO 2409:2007): Pass (Class 0).

### Example 2.

In this example, aluminium alloy panels coated with a cured hybrid sol-gel layer are prepared by the procedure outlined hereinabove using the following inventive radiation curable formulation (Formulation 2):

### Formulation 2:

- Cationic curable resin: Epalloy^{®} 5000 Diepoxide of the cycloaliphatic alcohol
- hydrogenated Bisphenol A (49.4 wt%);
- Organo mono(trialkoxysilane): C8TMS (n-octyl trimethoxysilane) (19.7 wt%)
- Organo bis(trialkoxysilane): 1,2-bis(trimethoxysilyl)decane: 29.6 wt%
- Cationic photoinitiator: 1250 / (4-methylphenyl)[4-(2 methylpropyl)phenyl]iodonium
- hexafluorophosphate (1.3 wt%);
- Characterization results of the samples prepared using this Formulation 2:
- Thickness (ISO 2360:2003): 20-28 µm;
- Solvent resistance (ISO 2812-1:1993): > 2 hours;
- SST Tests (NF EN ISO 9227:2007): > 3000 hours;
- Cross-cut Test (ISO 2409:2007): Pass (Class 0).

### Example 3.

In this example, aluminium alloy panels coated with a cured hybrid sol-gel layer are prepared by the procedure outlined hereinabove using the following comparative radiation curable formulation (Formulation 3):

### Formulation 3:

(i) 2.7 wt% (4-methylphenyl)[4-(2-methylpropyl)phenyl]iodonium hexafluorophosphate.
(ii) The remaining to 100 wt% being Diepoxide of the cycloaliphatic alcohol hydrogenated Bisphenol A and C8TMS (n-octyl trimethoxysilane) in a 60/40 ratio (wt/wt).

Characterization results of the samples prepared using this Formulation 3:
- Thickness (ISO 2360:2003): 20-28 µm;
- Solvent resistance (ISO 2812-1:1993): < 20 seconds;
- SST Tests (NF EN ISO 9227:2007): ^{∼} 1500 hours;
- Cross-cut Test (ISO 2409:2007): Pass (Class 0).

### Example 4.

In this example, aluminium alloy panels coated with a cured hybrid sol-gel layer are prepared by the procedure outlined hereinabove using the following inventive radiation curable formulation (Formulation 4):

### Formulation 4:

(i) 2.7 wt % (4-methylphenyl)[4-(2-methylpropyl)phenyl]iodonium hexafluorophosphate;
(ii) 0.5wt % polyether modified polydimethysiloxane;
(iii) The remaining material being Diepoxide of the cycloaliphatic alcohol hydrogenated Bisphenol A and C8TMS (n-octyl trimethoxysilane) and Poly(dimethoxy)siloxane in a 60/20/20 ratio (wt/wt/wt). Formulation 4 is Formulation 1 further comprising a wetting agent.

Characterization results of the samples prepared using this Formulation 4:
- Thickness (ISO 2360:2003): 20-25µm;
- Solvent resistance (ISO 2812-1:1993): > 2 hours;
- SST Tests (NF EN ISO 9227:2007): > 2000 hours;
- Cross-cut Test (ISO 2409:2007): Pass (Class 0).

The results are quite similar to the results obtained with formulation 1. However, the wetting agent makes the application easier.

## Claims

1. Radiation curable composition for preparing a hybrid sol-gel layer on a surface of a substrate, wherein said composition comprises:
(i) At least one radiation curable (i.e. polymerizable and/or crosslinkable) material capable of being polymerized and/or crosslinked by a cationic polymerization reaction upon exposure to a radiation, said radiation curable material comprising at least two cationically polymerizable functional groups; preferably selected from among cyclic ether groups such as epoxy, and oxetanyl groups, and vinyl ether functional groups; preferably, said epoxy groups are part of a glycidyl or glycidyloxy group;
(ii) A combination of at least one organofunctional silane of formula (I):
R₍₄₋ₘ₎ - Si-(OR')ₘ (I)
in which:
- m is a number between 1 and 3, preferably m is 3;
- OR' is an hydrolysable group; and
- R is a hydrocarbyl group optionally containing at least one heteroatom, selected from among oxygen, sulphur, and nitrogen atoms;
and of at least one other silane selected from among the group consisting of a poly(alkoxy siloxane) (II) wherein the alkoxy group has from 1 to 20C, and a bissilane of formula (III)
R¹[-Si(OR')₃]₂ (III)
in which:
- OR' is an hydrolysable group, and
- R¹ is a bivalent hydrocarbyl group optionally containing at least one heteroatom, selected from among oxygen, sulfur, and nitrogen atoms,
and mixtures thereof;
; and
(iii) At least one cationic photoinitiator ; preferably the cationic photoinitiator is combined with a sensitizer.

2. Composition according to claim 1, wherein the organofunctional silane of formula (I) is an organo mono (trialkoxysilane) in which:
- R' is a linear or branched alkyl group having 1 to 6C atoms, preferably R' is a methyl or ethyl group, and
- R is a linear or branched alkyl group having 1 to 20C atoms, preferably 4 to 16C atoms, more preferably from 8 to 12C atoms optionally interrupted by at least one heteroatom, selected among oxygen, sulphur, and nitrogen atoms; a cycloalkyl group having 3 to 20C atoms, for example 6C atoms; a linear or branched alkenyl group having 1 to 20C atoms such as a vinyl group; an aryl group having 3 to 20C atoms such as a phenyl group; an alkyl (1 to 20C)-aryl (3 to 20C) group; or an aryl (3 to 20C)-alkyl(1 to 20C) group; and R being optionally substituted by one or more substituent selected from the group consisting of halogen atoms, amino groups and SH groups ; preferably the organo mono (trialkoxysilane) is selected from among the group consisting of phenyl trimethoxysilane (Phenyl TMS), cyclohexyl trimethoxysilane (Cyclohexyl TMS), iso-butyl trimethoxysilane (iso-Butyl TMS), iso-octyl trimethoxysilane (iso-Octyl TMS); linear alkyl (1 to 20C) trimethoxysilanes (CnTMS with 1≤ n ≤ 20), preferably linear alkyl (1 to 8C) trimethoxysilanes (CnTMS with 1≤ n ≤ 8); vinyl trimethoxysilane, 3-aminopropyl trimethoxysilane, 3-mercaptopropyl trimethoxysilane, and mixtures thereof; preferably, the organo mono(trialkoxy silane) is selected from among the group consisting of iso-octyl trimethoxysilane, linear alkyl (4 to 8C) trimethoxysilanes (C4TMS to C8TMS), and mixtures thereof.

3. Composition according to claim 1 or 2, wherein the concentration of the radiation curable material is from 20% to 80 % by weight, preferably from 40% to 70 % by weight, more preferably from 50% to 60% by weight of the total weight of the radiation curable material, the silane of formula (I) and the other silane(s); the concentration of the silane of formula (I) is from 10% to 50% by weight, preferably from 10% to 40% by weight of the total weight of the radiation curable material, the silane of formula (I) and the other silane(s); and the total concentration of the other silane(s) is from 10% to 50% by weight, preferably from 10% to 40% by weight of the total weight of the radiation curable material, the silane of formula (I) and the other silane(s).

4. Composition according to any one of the preceding claims, wherein said radiation curable material is selected from the group consisting of epoxy resins and oxetane resins wherein the poly (alkoxysiloxane) (II) is selected from the group consisting of poly (dimethoxysiloxane) (PDMOS), poly (diethoxysiloxane) (PDEOS), and mixtures thereof; and wherein the bissilane of formula (III) is an organo bis (trialkoxysilane) in which:
- R' is a linear or branched alkyl group having 1 to 6C atoms, preferably R' is a methyl or ethyl group, and
- R¹ is a bivalent group and is a bivalent linear or branched alkyl group (i.e. alkylene group) having 1 to 20C atoms, preferably 4 to 16C atoms, more preferably from 8 to 12C atoms optionally interrupted by at least one heteroatom, selected from among oxygen, sulphur, and nitrogen atoms; a bivalent cycloalkyl group having 3 to 20C atoms, for example 6C atoms (cyclohexyl); a bivalent linear or branched alkenyl group having 1 to 20C atoms such as a bivalent vinyl group; a bivalent aryl group (i.e. arylene group) having 3 to 20C atoms such as a phenyl group (i.e. phenylene group); an -alkylene(1 to 20C)-arylene(3 to 20C)-group; or an -arylene(3 to 20C)-alkylene(1 to 20C)-group; or an -alkylene(1 to 20C)-arylene(3 to 20C)-alkylene(1 to 20C)-group; and R being optionally substituted by one or more substituent selected from the group consisting of halogen atoms, amino groups (NH₂), and SH groups; preferably the organo bis (trialkoxysilane) is selected from among the group consisting of 1,6-Bis(trimethoxysilyl)hexane, 1,8-Bis(trimethoxysilyl)octane, 1,2-Bis(trimethoxysilyl)decane, 1,4-Bis(trimethoxysilylethyl)benzene; still preferably, the organobis(trialkoxysilane) is 1,2-Bis(trimethoxysilyl)decane.

5. Composition according to any one of the preceding claims, wherein the radiation curable material is selected from among the group consisting of 1,4-butanediol diglycidyl ether, diepoxide of cycloaliphatic alcohol hydrogenated Bisphenol A, (3,4-Epoxycyclohexane) methyl 3,4-epoxy cyclohexyl carboxylate, 1,4-cyclohexane dimethanol diglycidyl ether, tetrahydrophthalic acid diglycidyl ester, resorcinol diglycidyl ether, Bis[4-(glycidyloxy)phenyl]methane, the reaction product of epichlorohydrin and bisphenol A (DER 331), N,N-diglycidyl-4-glycidyloxy aniline, 4,5-epoxy-tetrahydrophtalic acid diglycidyl ester, tris(4-hydroxyphenyl) methane triglycidyl ether, pentaerythritol tetraglycidyl ether, 4,4'-methylenebis(N,N-diglycidylaniline), 4-hydroxybutyl vinyl ether, triethyleneglycol divinyl ether, , 3-ethyl-3-hydroxymethyloxetane, Bis[1-ethyl(3-oxetanyl)] methyl ether, and mixtures thereof; preferably the radiation curable material is selected from among the group consisting of diepoxide of cycloaliphatic alcohol hydrogenated Bisphenol A, Pentaerythritol tetraglycidyl ether, Bis[1-ethyl(3-oxetanyl)] methyl ether, 3-ethyl-3-hydroxymethyl oxetane, and mixtures thereof.

6. Composition according to any one of the preceding claims, wherein the concentration of the cationic photoinitiator(s) is from 0.5% to 10% by weight, preferably from 0.5% to 5% by weight, more preferably from 0.5% to 3% by weight of the total weight of the composition.

7. Composition according to anyone of the preceding claims, wherein the cationic photoinitiator is selected from among the group consisting of onium salts, organometallic complexes, non-ionic photoacids, and mixtures thereof; preferably the onium salts are selected from among the group consisting of diaryliodonium salts and derivatives thereof, triarylsulfonium salts and derivatives thereof, and mixtures thereof, said onium salts having preferably hexafluoroantimonate, hexafluorophosphate or tetrafluoroborate anions, more preferably the onium salts are selected from among the group consisting of (4-methylphenyl)[4-(2-methylpropyl)phenyl]iodonium hexafluorophosphate, Bis-(4-methylphenyl)iodonium hexafluorophosphate), Bis(dodecyl phenyl) iodonium hexafluorophosphate, 9-(4-hydroxyethoxyphenyl) thianthrenium hexafluorophosphate, diphenyl iodonium triflate, and mixtures thereof; the organometallic complexes are selected from among metallocenium salts, preferably from among ferrocenium salts such as cyclopentadienylcumen-iron hexafluorophosphate; the non-ionic photoacids are selected from among the group consisting of alkyl/aryl sulfonic acid, fluorinated sulfonic acids, sulfonimides, tetra-aryl boronic acids, and mixtures thereof.

8. Composition according to any one of the preceding claims, further comprising at least one corrosion inhibitor; preferably the corrosion inhibitor is selected from among corrosion inhibiting pigments, organic salts, and mixtures thereof, more preferably, the corrosion inhibitor is selected from among the group consisting of praseodymium (III) oxide, calcium ion-exchanged synthetic amorphous silica, strontium aluminium polyphosphate hydrate, barium sulfate, zinc nitroisophtalate, antimony tin oxide, organophilized calcium strontium phosphosilicate, organophilized zinc phosphate, zinc molybdate, modified aluminium polyphosphate, molybdenum nanoparticles, β-cyclodextrine, 2-mercaptobenzothiazole, and mixtures thereof; even more preferably the corrosion inhibitor is selected from among the group consisting of Praseodymium (III) oxide, calcium ion-exchanged synthetic amorphous silica, strontium aluminium polyphosphate hydrate, and mixtures thereof.

9. Composition according to claim 8, wherein the concentration of the corrosion inhibitor is from 1% to 20% by weight, preferably from 5% to 10 % by weight of the total weight of the composition.

10. Composition according to any one of the preceding claims, further comprising at least one wetting agent; preferably the wetting agent is selected from among silicon surface additives; preferably, the wetting agent is a polyether modified polydimethylsiloxane.

11. Composition according to any one of the preceding claims, further comprising at least one filler; and/or at least one dye and/or pigment.

12. Method for preparing a hybrid sol-gel layer on a surface of a substrate wherein:
- A curable composition according to any one of claims 1 to 11, is deposited on the surface to give a layer of the composition on the surface of the substrate;
- Said layer of the composition is cured by exposure to a radiation, preferably to UV light, and to ambient atmospheric humidity whereby a hybrid sol-gel layer is obtained on the surface of the substrate; preferably, in a single operation, a layer of the composition is deposited so as to give a hybrid sol-gel layer with a dry thickness from 1 µm to 80 µm, preferably from 5 to 45 µm, more preferably from 10 to 30 µm.

13. Method according to Claim 12, wherein the substrate is made of a material selected from the group consisting of metals; metal alloys; organic or inorganic glasses; organic polymers such as plastics; wood; ceramics; textiles; concretes; papers; stone; carbon fibres and carbon fibres composites; and composite materials comprising two or more of the aforementioned materials; these materials being optionally plated and/or surface-treated and/or coated, for example painted ; preferably the substrate is made of a material selected from aluminium; titanium; copper; iron; magnesium; and alloys thereof, such as steels, for example stainless steels, aluminium alloys such as 2024 T3 aluminium alloys and Inconel; the surface of the substrate being optionally plated and/or surface-treated and/or coated, for example painted.

14. Method according to any one of Claims 12 to 13, wherein said hybrid sol-gel layer is a layer selected from anti-scratch; anti-abrasion; anti-friction; anti-fog; anti-static; anti-reflection; electroluminescent; photovariable; conducting (high and low K); superconducting; ferroelectric (piezoelectric and pyroelectric); barrier (to gases; to bases, to acids, to various chemical products, including strippers, hydraulic fluids such as "Skydrol"); soil-repellent; thermochromic; luminescent; non-linear optical; flame-retardant; sol-gel coating for composites; anti-adherent (adhesive resistant); insulating; anti-fouling; primer; paint; hydrophobic; hydrophilic; porous; biocidal; mold release agent and anti-wear hybrid sol-gel layers.

15. Method according to any one of claims 12 to 14, wherein said surface is coated only with said hybrid sol-gel layer, preferably containing a dye and/or pigment, therefore forming a monocoat on said surface, preferably the substrate is made of a metal or metal alloy and said monocoat is a so-called Direct to Metal Coating "DTM".

16. Hybrid sol-gel layer prepared by the method according to any one of Claims 12 to 15; preferably said hybrid sol-gel layer has a solvent resistance determined according to ISO 2812-1:1993 standard of above 2 hours, preferably of above 24 hours and has good adhesion properties as demonstrated by the fact that it passes the Cross-cut test according to ISO 2409:2003 standard.

17. Substrate comprising at least one surface coated with at least one hybrid sol-gel layer according to Claim 16 ; preferably, said at least one surface is coated only with said hybrid sol-gel layer, preferably containing a dye and/or pigment, therefore forming a monocoat on said surface, preferably the substrate is made of a metal or metal alloy and said monocoat is a so-called Direct to Metal Coating or "DTM".

18. Substrate according to claim 17 which is, or is a part of, an aircraft such as a plane, a seaplane, a flying boat, an helicopter; an aerospace vehicle; a marine vessel; an offshore platform; a motor vehicle such as a car.

19. Use of the hybrid sol-gel layer according to Claim 16 for imparting corrosion resistance to a surface of a substrate, in particular to a surface made of a material selected from metals such as aluminium, metal alloys such as aluminium alloys, and composite materials comprising a metal or a metal alloy ; preferably the substrate is made of aluminium or of an aluminium alloy and the hybrid sol-gel layer imparts a corrosion resistance to the surface in the salt spray test, according to NF EN ISO 9227:2007standard, of above 1000 hours, preferably of above 2000 hours, and more preferably of above 3000 hours.

20. Use according to Claim 19, wherein said surface is coated only with said hybrid sol-gel layer.

21. Method for preparing a coating comprising two or more layers on a surface of a substrate, at least one of these layers being a hybrid sol-gel layer prepared by the method according to any one of Claims 12 to 15.

22. Method according to Claim 21, for preparing a coating comprising two or more layers on a surface of a substrate, wherein:
- A first hybrid sol-gel layer is prepared on said surface; then
- One or more other layers (also called "overcoats") is (are) applied to said hybrid sol-gel layer, said other layers being selected, for example, from anti-corrosive primer, decorative paint, top coat, clear coat, sealant, adhesive, and resin layers.; preferably said other layer(s) is (are) hybrid sol-gel layer(s) prepared by the method according to any one of Claims 12 to 15.

## Patentansprüche

1. Strahlungshärtbare Zusammensetzung zum Herstellen einer hybriden Sol-Gel-Schicht auf einer Oberfläche eines Substrats, wobei die Zusammensetzung umfasst:
(i) wenigstens ein strahlungshärtbares (d. h. polymerisierbares und/oder vernetzbares) Material, das im Stande ist, durch eine kationische Polymerisationsreaktion polymerisiert und/oder vernetzt zu werden, nachdem es einer Strahlung ausgesetzt wurde, wobei das strahlungshärtbare Material wenigstens zwei kationisch polymerisierbare funktionelle Gruppen umfasst; vorzugsweise ausgewählt aus cyclischen Ethergruppen wie Epoxy- und Oxetanylgruppen, und funktionellen Vinylethergruppen; vorzugsweise sind die Epoxygruppen Teil einer Glycidyl- oder Glycidyloxygruppe;
(ii) eine Kombination von wenigstens einem organofunktionellen Silan der Formel (I):
R₍₄₋ₘ₎ - Si-(OR')m (I)
in welcher:
- m eine Zahl zwischen 1 und 3 ist, vorzugsweise m 3 ist;
- OR' eine hydrolysierbare Gruppe ist; und
- R eine Hydrocarbylgruppe ist, die gegebenenfalls wenigstens ein Heteroatom, ausgewählt aus Sauerstoff-, Schwefel- und Stickstoffatomen, enthält;
und von wenigstens einem anderen Silan, ausgewählt aus der Gruppe bestehend aus einem Poly(alkoxysiloxan) (II), wobei die Alkoxygruppe 1 bis 20 C aufweist, und einem Bissilan der Formel (III):
R¹[-Si(OR')₃]₂ (III)
in welcher:
- OR' eine hydrolysierbare Gruppe ist, und
- R¹ eine zweiwertige Hydrocarbylgruppe ist, die gegebenenfalls wenigstens ein Heteroatom, ausgewählt aus Sauerstoff-, Schwefel- und Stickstoffatomen, enthält,
und Mischungen davon; und
(iii) wenigstens einen kationischen Fotoinitiator; vorzugsweise ist der kationische Fotoinitiator mit einem Sensibilisator kombiniert.

2. Zusammensetzung nach Anspruch 1, wobei das organofunktionelle Silan der Formel (I) ein Organomono(trialkoxysilan) ist, in welchem:
- R' eine lineare oder verzweigte Alkylgruppe mit 1 bis 6 C-Atomen ist, vorzugsweise R' eine Methyl- oder Ethylgruppe ist, und
- R eine lineare oder verzweigte Alkylgruppe mit 1 bis 20 C-Atomen, vorzugsweise 4 bis 16 C-Atomen, stärker bevorzugt 8 bis 12 C-Atomen, die gegebenenfalls durch wenigstens ein Heteroatom, ausgewählt aus Sauerstoff-, Schwefel- und Stickstoffatomen, unterbrochen ist; eine Cycloalkylgruppe mit 3 bis 20 C-Atomen, z. B. 6 C-Atomen; eine lineare oder verzweigte Alkenylgruppe mit 1 bis 20 C-Atomen, wie etwa eine Vinylgruppe; eine Arylgruppe mit 3 bis 20 C-Atomen, wie etwa eine Phenylgruppe; eine Alkyl (1 bis 20 C)-Aryl (3 bis 20 C)-Gruppe; oder eine Aryl (3 bis 20 C)-Alkyl (1 bis 20 C)-Gruppe ist; und wobei R gegebenenfalls durch einen oder mehrere Substituenten substituiert ist, die ausgewählt sind aus der Gruppe bestehend aus Halogenatomen, Aminogruppen und SH-Gruppen; vorzugsweise ist das Organomono(trialkoxysilan) ausgewählt aus der Gruppe bestehend aus Phenyl-trimethoxysilan (Phenyl-TMS), Cyclohexyl-trimethoxysilan (Cyclohexyl-TMS), iso-Butyltrimethoxysilan (iso-Butyl-TMS), iso-Octyl-trimethoxysilan (iso-Octyl-TMS); lineares Alkyl (1 bis 20 C)-trimethoxysilanen (CnTMS mit 1 ≤ n ≤ 20), vorzugsweise lineares Alkyl (1 bis 8 C)-trimethoxysilanen (CnTMS mit 1 ≤ n ≤ 8); Vinyl-trimethoxysilan, 3-Aminopropyl-trimethoxysilan, 3-Mercaptopropyl-trimethoxysilan und Mischungen davon; vorzugsweise ist das Organomono(trialkoxysilan) ausgewählt aus der Gruppe bestehend aus iso-Octyl-trimethoxysilan, lineares Alkyl (4 bis 8 C)-trimethoxysilanen (C4TMS bis C8TMS) und Mischungen davon.

3. Zusammensetzung nach Anspruch 1 oder 2, wobei die Konzentration des strahlungshärtbaren Materials 20 bis 80 Gew.-%, vorzugsweise 40 bis 70 Gew.-%, stärker bevorzugt 50 bis 60 Gew.-% des Gesamtgewichts des strahlungshärtbaren Materials, des Silans der Formel (I) und des anderen Silans bzw. der anderen Silane beträgt; die Konzentration des Silans der Formel (I) 10 bis 50 Gew.-%, vorzugsweise 10 bis 40 Gew.-% des Gesamtgewichts des strahlungshärtbaren Materials, des Silans der Formel (I) und des anderen Silans bzw. der anderen Silane beträgt; und die Gesamtkonzentration des anderen Silans bzw. der anderen Silane 10 bis 50 Gew.-%, vorzugsweise 10 bis 40 Gew.-% des Gesamtgewichts des strahlungshärtbaren Materials, des Silans der Formel (I) und des anderen Silans bzw. der anderen Silane beträgt.

4. Zusammensetzung nach einem der vorangehenden Ansprüche, wobei das strahlungshärtbare Material ausgewählt ist aus der Gruppe bestehend aus Epoxyharzen und Oxetanharzen, wobei das Poly(alkoxysiloxan) (II) ausgewählt ist aus der Gruppe bestehend aus Poly(dimethoxysiloxan) (PDMOS), Poly(diethoxysiloxan) (PDEOS) und Mischungen davon; und wobei das Bissilan der Formel (III) ein Organobis(trialkoxysilan) ist, in welchem:
- R' eine lineare oder verzweigte Alkylgruppe mit 1 bis 6 C-Atomen ist, vorzugsweise R' eine Methyl- oder Ethylgruppe ist; und
- R¹ eine zweiwertige Gruppe ist und eine zweiwertige lineare oder verzweigte Alkylgruppe (d. h. Alkylengruppe) mit 1 bis 20 C-Atomen, vorzugsweise 4 bis 16 C-Atomen, stärker bevorzugt 8 bis 12 C-Atomen, die gegebenenfalls durch wenigstens ein Heteroatom, ausgewählt aus Sauerstoff-, Schwefel- und Stickstoffatomen, unterbrochen ist; eine zweiwertige Cycloalkylgruppe mit 3 bis 20 C-Atomen, z. B. 6 C-Atomen (Cyclohexyl); eine zweiwertige lineare oder verzweigte Alkenylgruppe mit 1 bis 20 C-Atomen wie etwa eine zweiwertige Vinylgruppe; eine zweiwertige Arylgruppe (d. h. Arylengruppe) mit 3 bis 20 C-Atomen wie etwa eine Phenylgruppe (d. h. Phenylengruppe); eine -Alkylen(1 bis 20 C)-Arylen(3 bis 20 C)-Gruppe; oder eine -Arylen(3 bis 20 C)-Alkylen(1 bis 20 C)-Gruppe; oder eine -Alkylen(1 bis 20 C)-Arylen(3 bis 20 C)-Alkylen(1 bis 20 C)-Gruppe ist; und wobei R gegebenenfalls durch einen oder mehrere Substituenten substituiert ist, die ausgewählt sind aus der Gruppe bestehend aus Halogenatomen, Aminogruppen (NH₂) und SH-Gruppen; vorzugsweise ist das Organo-bis(trialkoxysilan) ausgewählt aus der Gruppe bestehend aus 1,6-Bis(trimethoxysilyl)hexan, 1,8-Bis(trimethoxysilyl)octan, 1,2-Bis(trimethoxysilyl)decan, 1,4-Bis(trimethoxysilylethyl)benzol; noch bevorzugt ist das Organobis(trialkoxysilan) 1,2-Bis(trimethoxysilyl)decan.

5. Zusammensetzung nach einem der vorangehenden Ansprüche, wobei das strahlungshärtbare Material ausgewählt ist aus der Gruppe bestehend aus 1,4-Butandioldiglycidylether, Diepoxid von cycloaliphatischem Alkohol hydriertes Bisphenol A, (3,4-Epoxycyclohexan)methyl-3,4-epoxy-cyclohexylcarboxylat, 1,4-Cyclohexandimethanoldiglycidylether, Tetrahydrophthalsäurediglycidylester, Resorcinoldiglycidylether, Bis[4-(glycidyloxy)phenyl]methan, dem Reaktionsprodukt von Epichlorhydrin und Bisphenol A (DER 331), N,N-Diglycidyl-4-glycidyloxy-anilin, 4,5-Epoxy-tetrahydrophthalsäurediglycidylester, Tris(4-hydroxyphenyl)methantriglycidylether, Pentaerythritoltetraglycidylether, 4,4'-Methylenbis(N,N-diglycidylanilin), 4-Hydroxybutylvinylether, Triethylenglycoldivinylether, 3-Ethyl-3-hydroxymethyloxetan, Bis[1-ethyl(3-oxetanyl)]methylether und Mischungen davon; vorzugsweise ist das strahlungshärtbare Material ausgewählt aus der Gruppe bestehend aus Diepoxid von cycloaliphatischem Alkohol hydriertes Bisphenol A, Pentaerythritoltetraglycidylether, Bis[1-ethyl(3-oxetanyl)]methylether, 3-Ethyl-3-hydroxymethyloxetan und Mischungen davon.

6. Zusammensetzung nach einem der vorangehenden Ansprüche, wobei die Konzentration des kationischen Fotoinitiators bzw. der kationischen Fotoinitiatoren 0,5 bis 10 Gew.-%, vorzugsweise 0,5 bis 5 Gew.-%, stärker bevorzugt 0,5 bis 3 Gew.-% des Gesamtgewichts der Zusammensetzung beträgt.

7. Zusammensetzung nach einem der vorangehenden Ansprüche, wobei der kationische Fotoinitiator ausgewählt ist aus der Gruppe bestehend aus Oniumsalzen, metallorganischen Komplexen, nichtionischen Fotosäuren und Mischungen davon; vorzugsweise sind die Oniumsalze ausgewählt aus der Gruppe bestehend aus Diaryliodoniumsalzen und Derivaten davon, Triarylsulfoniumsalzen und Derivaten davon, und Mischungen davon, wobei die Oniumsalze vorzugsweise Hexafluorantimonat-, Hexafluorphosphat- oder Tetrafluorborat-Anionen haben, stärker bevorzugt sind die Oniumsalze ausgewählt aus der Gruppe bestehend aus (4-Methylphenyl)[4-(2-methylpropyl)phenyl]iodonium-hexafluorphosphat, Bis-(4-methyl-phenyl)iodonium-hexafluorphosphat), Bis(dodecylphenyl)iodonium-hexafluorphosphat, 9-(4-Hydroxyethoxyphenyl)thianthrenium-hexafluorphosphat, Diphenyliodonium-triflat und Mischungen davon; die metallorganischen Komplexe sind ausgewählt aus Metalloceniumsalzen, vorzugsweise aus Ferroceniumsalzen wie Cyclopentadienylcumen-Eisen-hexafluorphosphat; die nichtionischen Fotosäuren sind ausgewählt aus der Gruppe bestehend aus Alkyl/Aryl-sulfonsäure, fluorierten Sulfonsäuren, Sulfonimiden, Tetraarylboronsäuren und Mischungen davon.

8. Zusammensetzung nach einem der vorangehenden Ansprüche, außerdem umfassend wenigstens einen Korrosionshemmer; vorzugsweise ist der Korrosionshemmer ausgewählt aus korrosionshemmenden Pigmenten, organischen Salzen und Mischungen davon, stärker bevorzugt ist der Korrosionshemmer ausgewählt aus der Gruppe bestehend aus Praseodym(III)-oxid, Calciumionen-ausgetauschtem synthetischen amorphen Siliciumdioxid, Strontiumaluminiumpolyphosphathydrat, Bariumsulfat, Zinknitroisophthalat, Antimonzinnoxid, organophilisiertem Calciumstrontiumphosphosilicat, organophilisiertem Zinkphosphat, Zinkmolybdat, modifiziertem Aluminiumpolyphosphat, Molybdän-Nanopartikeln, β-Cyclo-dextrin, 2-Mercaptobenzothiazol und Mischungen davon; noch stärker bevorzugt ist der Korrosionshemmer ausgewählt aus der Gruppe bestehend aus Praseodym(III)-oxid, Calciumionen-ausgetauschtem synthetischen amorphen Siliciumdioxid, Strontiumaluminiumpolyphosphathydrat und Mischungen davon.

9. Zusammensetzung nach Anspruch 8, wobei die Konzentration des Korrosionshemmers 1 bis 20 Gew.-%, vorzugsweise 5 bis 10 Gew.-% des Gesamtgewichts der Zusammensetzung beträgt.

10. Zusammensetzung nach einem der vorangehenden Ansprüche, außerdem umfassend wenigstens ein Netzmittel; vorzugsweise ist das Netzmittel ausgewählt aus Silicium-Oberflächenadditiven; vorzugsweise ist das Netzmittel ein Polyether-modifiziertes Polydimethylsiloxan.

11. Zusammensetzung nach einem der vorangehenden Ansprüche, außerdem umfassend wenigstens einen Füllstoff; und/oder wenigstens einen Farbstoff und/oder wenigstens ein Pigment.

12. Verfahren zum Herstellen einer hybriden Sol-Gel-Schicht auf einer Oberfläche eines Substrats, wobei:
- eine härtbare Zusammensetzung nach einem der Ansprüche 1 bis 11 auf der Oberfläche abgeschieden wird, um eine Schicht der Zusammensetzung auf der Oberfläche des Substrats zu ergeben;
- die Schicht der Zusammensetzung gehärtet wird, indem sie einer Strahlung, vorzugsweise UV-Licht, und der Feuchtigkeit der umgebenden Atmosphäre ausgesetzt wird, wodurch eine hybride Sol-Gel-Schicht auf der Oberfläche des Substrats erhalten wird; vorzugsweise wird in einem einzigen Arbeitsgang eine Schicht der Zusammensetzung abgeschieden, so dass eine hybride Sol-Gel-Schicht mit einer Trockendicke von 1 µm bis 80 µm, vorzugsweise 5 bis 45 µm, stärker bevorzugt 10 bis 30 µm, erhalten wird.

13. Verfahren nach Anspruch 12, wobei das Substrat aus einem Material gefertigt ist, ausgewählt aus der Gruppe bestehend aus Metallen; Metalllegierungen; organischen oder anorganischen Gläsern; organischen Polymeren wie Kunststoffen; Holz; Keramik; Textilien; Betonsorten; Papieren; Stein; Kohlenstofffasern und Kohlenstofffaserverbundstoffen; und Verbundmaterialien, die zwei oder mehr der vorstehend erwähnten Materialien umfassen, wobei diese Materialien gegebenenfalls plattiert und/oder oberflächenbehandelt und/oder beschichtet, z. B. angestrichen sind; vorzugsweise ist das Substrat aus einem Material gefertigt, ausgewählt aus Aluminium; Titan; Kupfer; Eisen; Magnesium; und Legierungen davon, wie etwa Stählen, z. B. Edelstählen, Aluminiumlegierungen wie 2024 T3-Aluminiumlegierungen und Inconel; wobei die Oberfläche des Substrats gegebenenfalls plattiert und/oder oberflächenbehandelt und/oder beschichtet, z. B. angestrichen, ist.

14. Verfahren nach einem der Ansprüche 12 bis 13, wobei die hybride Sol-Gel-Schicht eine Schicht ist, die ausgewählt ist aus kratzfesten; abriebfesten; reibungsmindernden bzw. reibungslosen; beschlagverhindernden; antistatischen; Antireflex-; elektrolumineszierenden; fotovariablen; leitenden (mit hohem und niedrigem K); supraleitenden; ferroelektrischen (piezoelektrischen und pyroelektrischen); Sperr- (gegenüber Gasen; gegenüber Basen, gegenüber Säuren, gegenüber verschiedenen chemischen Produkten, einschließlich Abbeizmitteln, Hydraulikfluiden wie "Skydrol"); schmutzabweisenden; thermochromen; lumineszierenden; nichtlinearen optischen; flammhemmenden; Sol-Gel-Beschichtung für Verbundstoffe; Antihaft- (klebstoffresistenten); isolierenden; Antifouling-; Grundierungs-; Farb-; hydrophoben; hydrophilen; porösen; bioziden; Formtrennmittel-; und verschleißhemmenden hybriden Sol-Gel-Schichten.

15. Verfahren nach einem der Ansprüche 12 bis 14, wobei die Oberfläche nur mit der hybriden Sol-Gel-Schicht beschichtet ist, die vorzugsweise einen Farbstoff und/oder ein Pigment enthält, wobei deshalb eine Monoschicht auf der Oberfläche gebildet wird und das Substrat vorzugsweise aus einem Metall oder einer Metalllegierung gefertigt ist und die Monoschicht eine sogenannte Direkt-auf-Metall-Beschichtung (Direct to Metal Coating "DTM") ist.

16. Hybride Sol-Gel-Schicht, die durch das Verfahren nach einem der Ansprüche 12 bis 15 hergestellt ist; vorzugsweise weist diese hybride Sol-Gel-Schicht eine Lösungsmittelbeständigkeit, bestimmt gemäß der Norm ISO 2812-1:1993, von mehr als 2 Stunden, vorzugsweise mehr als 24 Stunden, auf und hat gute Anhaftungseigenschaften, wie durch die Tatsache gezeigt wird, dass sie die Gitterschnittprüfung gemäß der Norm ISO 2409:2003 besteht.

17. Substrat, umfassend wenigstens eine Oberfläche, die mit wenigstens einer hybriden Sol-Gel-Schicht gemäß Anspruch 16 beschichtet ist; vorzugsweise ist die wenigstens eine Oberfläche nur mit der hybriden Sol-Gel-Schicht beschichtet, die vorzugsweise einen Farbstoff und/oder ein Pigment enthält, wobei deshalb eine Monoschicht auf der Oberfläche gebildet wird und das Substrat vorzugsweise aus einem Metall oder einer Metalllegierung gefertigt ist und die Monoschicht eine sogenannte Direkt-auf-Metall-Beschichtung oder "DTM" ist.

18. Substrat nach Anspruch 17, welches ein Fluggerät wie ein Flugzeug, ein Wasserflugzeug, ein Flugboot, ein Helikopter; ein Raumfahrzeug; ein Seefahrzeug; eine Offshore-Plattform; ein Kraftfahrzeug wie etwa ein Automobil, oder ein Teil davon ist.

19. Verwendung der hybriden Sol-Gel-Schicht nach Anspruch 16, um einer Oberfläche eines Substrats, insbesondere einer Oberfläche, die aus einem Material, ausgewählt aus Metallen wie Aluminium, Metalllegierungen wie Aluminiumlegierungen und Verbundmaterialien umfassend ein Metall oder eine Metalllegierung, Korrosionsbeständigkeit zu verleihen; vorzugsweise ist das Substrat aus Aluminium oder einer Aluminiumlegierung gefertigt und die hybride Sol-Gel-Schicht verleiht der Oberfläche Korrosionsbeständigkeit in dem Salzsprühtest gemäß der Norm NF EN ISO 9227:2007, von mehr als 1000 Stunden, vorzugsweise mehr als 2000 Stunden und stärker bevorzugt mehr als 3000 Stunden.

20. Verwendung nach Anspruch 19, wobei die Oberfläche nur mit der hybriden Sol-Gel-Schicht beschichtet ist.

21. Verfahren zum Herstellen einer Beschichtung, umfassend zwei oder mehr Schichten auf einer Oberfläche eines Substrats, wobei wenigstens eine von diesen Schichten eine hybride Sol-Gel-Schicht ist, die durch das Verfahren nach einem der Ansprüche 12 bis 15 hergestellt ist.

22. Verfahren nach Anspruch 21 zum Herstellen einer Beschichtung, die zwei oder mehr Schichten umfasst, auf einer Oberfläche eines Substrats, wobei:
- eine erste hybride Sol-Gel-Schicht auf der Oberfläche hergestellt wird; anschließend
- eine oder mehrere andere Schichten (auch als "Deckschichten" bezeichnet) auf die hybride Sol-Gel-Schicht aufgebracht wird (werden), wobei die anderen Schichten ausgewählt sind aus beispielsweise einer korrosionshemmenden Grundierung, einem Zieranstrich, einem Decklack, einem Klarlack, einem Dichtungsmittel, einem Klebstoff und Harzschichten; vorzugsweise ist (sind) die andere(n) Schicht(en) hybride Sol-Gel-Schicht(en), die durch das Verfahren nach einem der Ansprüche 12 bis 15 hergestellt ist (sind).

## Revendications

1. Composition durcissable par rayonnement pour préparer une couche sol-gel hybride sur une surface d'un substrat, laquelle composition comprend :
(i) au moins un matériau durcissable (à savoir, polymérisable et/ou réticulable) par rayonnement, capable d'être polymérisé et/ou réticulé par une réaction de polymérisation cationique par exposition à un rayonnement, ledit matériau durcissable par rayonnement comprenant au moins deux groupes fonctionnels polymérisables cationiquement ; de préférence choisis parmi les groupes éthers cycliques tels qu'époxy, et les groupes oxétanyles, et les groupes fonctionnels éthers de vinyle ; de préférence, lesdits groupes époxy font partie d'un groupe glycidyle ou glycidyloxy ;
(ii) une combinaison d'au moins un silane organofonctionnel de formule (I) :
R₍₄₋ₘ₎-Si-(OR')ₘ (I)
dans laquelle :
- m est un nombre entre 1 et 3, de préférence m est 3 ;
- OR' est un groupe hydrolysable ; et
- R est un groupe hydrocarbyle contenant facultativement au moins un hétéroatome, choisi parmi les atomes d'oxygène, de soufre et d'azote ;
et d'au moins un autre silane choisi dans le groupe constitué par un poly(alcoxysiloxane) (II) dans lequel le groupe alcoxy a de 1 à 20C, et un bisilane de formule (III) :
R¹[-Si(OR')₃]₂ (III)
dans laquelle :
- OR' est un groupe hydrolysable, et
- R¹ est un groupe hydrocarbyle bivalent contenant facultativement au moins un hétéroatome, choisi parmi les atomes d'oxygène, de soufre et d'azote,
et les mélanges de ceux-ci ;
et
(iii) au moins un photo-initiateur cationique ; de préférence le photo-initiateur cationique est combiné avec un sensibilisateur.

2. Composition selon la revendication 1, dans laquelle le silane organofonctionnel de formule (I) est un organo mono (trialcoxysilane) dans lequel :
- R' est un groupe alkyle linéaire ou ramifié ayant 1 à 6 atomes de C, de préférence R' est un groupe méthyle ou éthyle, et
- R est un groupe alkyle linéaire ou ramifié ayant 1 à 20 atomes de C, de préférence 4 à 16 atomes de C, de préférence encore de 8 à 12 atomes de C, facultativement interrompu par au moins un hétéroatome, choisi parmi les atomes d'oxygène, de soufre et d'azote ; un groupe cycloalkyle ayant 3 à 20 atomes de C, par exemple 6 atomes de C ; un groupe alcényle linéaire ou ramifié ayant 1 à 20 atomes de C tel qu'un groupe vinyle ; un groupe aryle ayant 3 à 20 atomes de C tel qu'un groupe phényle ; un groupe alkyl (1 à 20C)-aryle (3 à 20C) ; ou un groupe aryl (3 à 20 C)-alkyle (1 à 20C) ; et R étant facultativement substitué par un ou plusieurs substituants choisis dans le groupe constitué par les atomes d'halogène, les groupes amino et les groupes SH ; de préférence l'organo mono (trialcoxysilane) est choisi dans le groupe constitué par le phényl triméthoxysilane (Phényl TMS), le cyclohexyl triméthoxysilane (Cyclohexyl TMS), l'isobutyl triméthoxysilane (iso-Butyl TMS), l'iso-octyl triméthoxysilane (iso-Octyl TMS) ; les alkyl linéaires (1 à 20C) triméthoxysilanes (CnTMS avec 1≤n≤20), de préférence les alkyl linéaires (1 à 8C) triméthoxysilanes (CnTMS avec 1 ≤ n ≤ 8); le vinyl triméthoxysilane, le 3-aminopropyl triméthoxysilane, le 3-mercaptopropyl triméthoxysilane, et les mélanges de ceux-ci ; de préférence l'organo mono (trialcoxy silane) est choisi dans le groupe constitué par l'iso-octyl triméthoxysilane, les alkyl linéaires (4 à 8C) triméthoxysilanes (C4TMS à C8TMS), et les mélanges de ceux-ci.

3. Composition selon la revendication 1 ou 2, dans laquelle la concentration du matériau durcissable par rayonnement est de 20 % à 80 % en poids, de préférence de 40 % à 70 % en poids, de préférence encore de 50 % à 60 % en poids du poids total du matériau durcissable par rayonnement, du silane de formule (I) et du (des) autre(s) silane(s) ; la concentration du silane de formule (I) est de 10 % à 50 % en poids, de préférence de 10 % à 40 % en poids du poids total du matériau durcissable par rayonnement, du silane de formule (I) et du (des) autre(s) silane(s) ; et la concentration totale du (des) autre(s) silane(s) est de 10 % à 50 % en poids, de préférence de 10 % à 40 % en poids du poids total du matériau durcissable par rayonnement, du silane de formule (I) et du (des) autre(s) silane(s).

4. Composition selon l'une quelconque des revendications précédentes, dans laquelle ledit matériau durcissable par rayonnement est choisi dans le groupe constitué par les résines époxy et les résines oxétanes, dans laquelle le poly-(alcoxysiloxane) (II) est choisi dans le groupe constitué par un poly(diméthoxysiloxane) (PDMOS), un poly(diéthoxysiloxane) (PDEOS), et les mélanges de ceux-ci ; et dans laquelle le bisilane de formule (III) est un organo bis(trialcoxysilane) dans lequel :
- R' est un groupe alkyle linéaire ou ramifié ayant 1 à 6 atomes de C, de préférence R' est un groupe méthyle ou éthyle, et
- R¹ est un groupe bivalent et est un groupe alkyle linéaire ou ramifié bivalent (à savoir, un groupe alkylène) ayant 1 à 20 atomes de C, de préférence 4 à 16 atomes de C, de préférence encore de 8 à 12 atomes de C, facultativement interrompu par au moins un hétéroatome, choisi parmi les atomes d'oxygène, de soufre et d'azote ; un groupe cycloalkyle bivalent ayant 3 à 20 atomes de C, par exemple 6 atomes de C (cyclohexyle) ; un groupe alcényle linéaire ou ramifié bivalent ayant 1 à 20 atomes de C tels qu'un groupe vinyle bivalent ; un groupe aryle bivalent (à savoir, un groupe arylène) ayant 3 à 20 atomes de C tel qu'un groupe phényle bivalent (à savoir, un groupe phénylène) ; un groupe -alkylène (1 à 20C)-arylène (3 à 20C)- ; ou un groupe -arylène (3 à 20 C)-alkylène (1 à 20C)- ; ou un groupe -alkylène (1 à 20 C)-arylène (3 à 20C)-alkylène (1 à 20C)- ; et R étant facultativement substitué par un ou plusieurs substituants choisi(s) dans le groupe constitué par les atomes d'halogène, les groupes amino (NH₂), et les groupes SH ; de préférence l'organo bis(trialcoxysilane) est choisi dans le groupe constitué par le 1,6-bis(triméthoxysilyl)hexane, le 1,8-bis(triméthoxysilyl)octane, le 1,2-bis(triméthoxysilyl)décane, le 1,4-bis(triméthoxysilyléthyl)benzène ; de préférence encore l'organo bis(trialcoxysilane) est le 1,2-bis(triméthoxysilyl)-décane.

5. Composition selon l'une quelconque des revendications précédentes, dans laquelle le matériau durcissable par rayonnement est choisi dans le groupe constitué par un éther diglycidylique de 1,4-butanediol, un diépoxyde de l'alcool cycloaliphatique bisphénol A hydrogéné, le méthyl 3,4-époxy cyclohexyl carboxylate de (3,4-époxycyclohexane), un éther diglycidylique de 1,4-cyclohexane diméthanol, un ester diglycidylique d'acide tétrahydrophtalique, un éther diglycidylique de résorcinol, le bis[4-(glycidoxy)phényl]-méthane, le produit de réaction d'épichlorhydrine et de bisphénol A (DER 331), la N,N-diglycidyl-4-glycidyloxy aniline, un ester diglycidylique d'acide 4,5-époxy-tétrahydrophtalique, un éther triglycidylique de tris(4-hydroxyphényl)méthane, un éther tétraglydicylique de pentaérythritol, la 4,4'-méthylènebis(N,N-diglycidylaniline), un éther de 4-hydroxybutyl vinyle, un éther divinylique de triéthylèneglycol, le 3-éthyl-3-hydroxy-méthyloxétane, un éther de bis[1-éthyl(3-oxétanyl)] méthyle, et les mélanges de ceux-ci ; de préférence le matériau durcissable par rayonnement est choisi dans le groupe constitué par un diépoxyde de l'alcool cycloaliphatique bisphénol A hydrogéné, un éther tétraglycidylique de pentaérythritol, un éther de bis[1-éthyl(3-oxétanyl)] méthyle, le 3-éthyl-3-hydroxy-méthyloxétane, et les mélanges de ceux-ci.

6. Composition selon l'une quelconque des revendications précédentes, dans laquelle la concentration du (des) photo-iniateur(s) cationique(s) est de 0,5 % à 10 % en poids, de préférence de 0,5 % à 5 % en poids, de préférence encore de 0,5 % à 3 % en poids du poids total de la composition.

7. Composition selon l'une quelconque des revendications précédentes, dans laquelle le photo-initiateur cationique est choisi dans le groupe constitué par les sels d'onium, les complexes organométalliques, les photoacides non ioniques, et les mélanges de ceux-ci ; de préférence les sels d'onium sont choisis dans le groupe constitué par les sels de diaryliodonium et les dérivés de ceux-ci, les sels de triarylsulfonium et les dérivés de ceux-ci, et les mélanges de ceux-ci, lesdits sels d'onium ayant de préférence des anions hexafluoro-antimoniates, hexafluorophosphates ou tétrafluoroborates, de préférence encore les sels d'onium sont choisis dans le groupe constitué par l'hexafluorophosphate de (4-méthylphényl)[4-(2-méthyl-propyl)phényl]-iodonium, l'hexafluorophosphate de bis-(4-méthylphényl)-iodonium, l'hexafluorophosphate de bis(dodécyl phényl)-iodonium, l'hexafluorophosphate de 9-(4-hydroxyéthoxyphényl) thianthrénium, le triflate de diphényl iodonium, et les mélanges de ceux-ci ; les complexes organométalliques sont choisis parmi les sels de métallocénium, de préférence parmi les sels de ferrocénium tels que l'hexafluorophosphate de cyclopentadiénylcumène-fer ; les photoacides non ioniques sont choisis dans le groupe constitué par un acide alkyl/aryl sulfonique, les acides sulfoniques fluorés, les sulfonimides, les acides tétra-aryl boroniques, et les mélanges de ceux-ci.

8. Composition selon l'une quelconque des revendications précédentes, comprenant en outre au moins un inhibiteur de corrosion ; de préférence l'inhibiteur de corrosion est choisi parmi les pigments inhibant la corrosion, les sels organiques, et les mélanges de ceux-ci, de préférence encore l'inhibiteur de corrosion est choisi dans le groupe constitué par un oxyde de praséodyme (III), une silice amorphe synthétique à échange d'ions calcium, un polyphosphate de strontium et d'aluminium hydraté, un sulfate de baryum, un nitro-isophtalate de zinc, un oxyde d'étain et d'antimoine, un phosphosilicate de calcium et de strontium rendu organophile, un phosphate de zinc rendu organophile, un molybdate de zinc, un polyphosphate d'aluminium modifié, des nanoparticules de molybdène, une β-cyclodextrine, un 2-mercaptobenzothiazole, et les mélanges de ceux-ci ; encore plus de préférence l'inhibiteur de corrosion est choisi dans le groupe constitué par un oxyde de praséodyme (III), une silice amorphe synthétique à échange d'ions calcium, un polyphosphate de strontium et d'aluminium hydraté, et les mélanges de ceux-ci.

9. Composition selon la revendication 8, dans laquelle la concentration de l'inhibiteur de corrosion est de 1 % à 20 % en poids, de préférence de 5 % à 10 % en poids du poids total de la composition.

10. Composition selon l'une quelconque des revendications précédentes, comprenant en outre au moins un agent mouillant ; de préférence l'agent mouillant est choisi parmi les additifs de surface siliciés ; de préférence l'agent mouillant est un polydiméthylsiloxane modifié par un polyéther.

11. Composition selon l'une quelconque des revendications précédentes, comprenant en outre au moins une charge ; et/ou au moins un colorant et/ou pigment.

12. Procédé pour préparer une couche sol-gel hybride sur une surface d'un substrat, dans lequel :
- une composition durcissable selon l'une quelconque des revendications 1 à 11, est déposée sur la surface pour donner une couche de la composition sur la surface du substrat ;
- ladite couche de la composition est durcie par exposition à un rayonnement, de préférence à une lumière UV, et à une humidité atmosphérique ambiante de sorte qu'une couche sol-gel hybride est obtenue sur la surface du substrat ; de préférence, en une opération unique, une couche de la composition est déposée de façon à donner une couche sol-gel hybride ayant une épaisseur à sec de 1 µm à 80 µm, de préférence de 5 à 45 µm, de préférence encore de 10 à 30 µm.

13. Procédé selon la revendication 12, dans lequel le substrat est en un matériau choisi dans le groupe constitué par les métaux ; les alliages métalliques ; les verres organiques ou inorganiques ; les polymères organiques tels que les matières plastiques ; le bois ; les céramiques ; les textiles ; les bétons ; les papiers ; la pierre ; les fibres de carbone et les composites de fibres de carbone ; et les matériaux composites comprenant deux ou plus des matériaux susmentionnés ; ces matériaux étant facultativement plaqués et/ou traités en surface et/ou revêtus, par exemple peints ; de préférence le substrat est en un matériau choisi parmi l'aluminium ; le titane ; le cuivre ; le fer ; le magnésium ; et les alliages de ceux-ci, tels que les aciers, par exemple les aciers inoxydables, les alliages d'aluminium tels que les alliages d'aluminium 2024 T3 et l'Inconel ; la surface du substrat étant facultativement plaquée et/ou traitée en surface et/ou revêtue, par exemple peinte.

14. Procédé selon l'une quelconque des revendications 12 à 13, dans lequel ladite couche sol-gel hybride est une couche choisie parmi les couches sol-gel hybrides anti-rayures ; anti-abrasion ; anti-frottements ; anti-buée ; anti-statiques ; anti-reflets ; électroluminescentes ; photovariables ; conductrices (haut et bas K) ; superconductrices ; ferroélectriques (piézo-électriques et pyro-électriques) ; barrière (aux gaz ; aux bases, aux acides, à divers produits chimiques, incluant les décapants, les fluides hydrauliques tels que le "Skydrol") ; anti-salissures ; thermochromiques ; luminescentes ; optiques non linéaires ; retardatrices de flamme ; revêtement sol-gel pour composites ; anti-adhérentes (résistantes à l'adhésion) ; isolantes ; anti-encrassement ; primaires ; peinture ; hydrophobes ; hydrophiles ; poreuses ; biocides ; agent de démoulage et anti-usure.

15. Procédé selon l'une quelconque des revendications 12 à 14, dans lequel ladite surface est revêtue seulement avec ladite couche sol-gel hybride, contenant de préférence un colorant et/ou un pigment, formant par conséquent une monocouche sur ladite surface, de préférence le substrat est en un métal ou alliage métallique et ladite monocouche est un revêtement dénommé revêtement direct sur métal "DTM".

16. Couche sol-gel hybride préparée par le procédé selon l'une quelconque des revendications 12 à 15 ; de préférence ladite couche sol-gel hybride a une résistance aux solvants déterminée d'après la norme ISO 2812-1:1993 de plus de 2 heures, de préférence de plus de 24 heures et a de bonnes propriétés d'adhésion comme le démontre le fait qu'elle réussit l'essai de résistance aux incisions croisées d'après la norme ISO 2409:2003.

17. Substrat comprenant au moins une surface revêtue avec au moins une couche sol-gel hybride selon la revendication 16 ; de préférence, ladite au moins une surface est revêtue seulement avec ladite couche sol-gel hybride, de préférence contenant un colorant et/ou un pigment, formant par conséquent une monocouche sur ladite surface, de préférence le substrat est en un métal ou alliage métallique et ladite monocouche est un revêtement dénommé revêtement direct sur métal ou "DTM".

18. Substrat selon la revendication 17 qui est, ou est une partie de, un aéronef tel qu'un avion, un hydravion, un hydravion à coque, un hélicoptère ; un véhicule aérospatial ; un navire ; une plate-forme en mer « offshore » ; un véhicule à moteur tel qu'une voiture.

19. Utilisation de la couche sol-gel hybride selon la revendication 16 pour conférer une résistance à la corrosion à une surface d' un substrat, en particulier à une surface en un matériau choisi parmi les métaux tels que l'aluminium, les alliages métalliques tels que les alliages d'aluminium, et les matériaux composites comprenant un métal ou un alliage métallique ; de préférence le substrat est en aluminium ou en un alliage d'aluminium et la couche sol-gel hybride confère une résistance à la corrosion à la surface dans l'épreuve au brouillard salin, d'après la norme NF EN ISO 9227:2007, de plus de 1000 heures, de préférence de plus de 2000 heures, et de préférence encore de plus de 3000 heures.

20. Utilisation selon la revendication 19, dans laquelle ladite surface est revêtue seulement avec ladite couche sol-gel hybride.

21. Procédé pour préparer une composition de revêtement comprenant deux couches ou plus sur une surface d'un substrat, au moins l'une de ces couches étant une couche sol-gel hybride préparée par le procédé selon l'une quelconque des revendications 12 à 15.

22. Procédé selon la revendication 21, pour préparer un revêtement comprenant deux couches ou plus sur une surface d'un substrat, dans lequel :
- une première couche sol-gel hybride est préparée sur ladite surface ; puis
- une ou plusieurs autres couches (aussi dénommées "couches de dessus") est (sont) appliquée(s) sur ladite couche sol-gel hybride, lesdites autres couches étant choisies, par exemple, parmi une primaire anticorrosion, une peinture décorative, une couche supérieure, une couche transparente, une couche de scellement, un adhésif et les couches de résine ; de préférence, ladite (lesdites) autre(s) couche(s) est (sont) une (des) couche(s) sol-gel hybride(s) préparée(s) par le procédé selon l'une quelconque des revendications 12 à 15.
